# EUROPÄISCHE PATENTSCHRIFT

(11) **EP 2 184 264 B1**
(45) Veröffentlichungstag und Bekanntmachung des Hinweises auf die Patenterteilung: **31.10.2018**
(21) Anmeldenummer: 10002098.1
(22) Anmeldetag: 18.01.2007
(51) Int. Cl.: C03B 5/16, C03B 5/43, C03B 5/167

(54) **Vorrichtung zum blasenfreien Transportieren, Homogenisieren und Konditionieren von geschmolzenem Glas**
Apparatus to transport, homogenize, and condition molted glass
Appareil pour transporter, homogénéiser et conditionner du verre fondu

(30) Priorität: 24.01.2006 DE 102006003531
(43) Veröffentlichungstag der Anmeldung: 12.05.2010
(62) Teilanmeldung aus: 07702855.3
(73) Patentinhaber: Schott AG, 55122 Mainz (DE)
(72) Erfinder: Witte, Jörg, Dr., 64319 Pfungstadt (DE); Dick, Erhard, 95701 Pechbrunn (DE); Stinner, Johannes, 55131 Mainz (DE); Lübbers, Katharina, 55252 Mainz-Kastel (DE); Kissl, Paul, 55124 Mainz (DE); Fuchs, Roland, 95666 Leonberg (DE)
(74) Vertreter: Herden, Andreas F.

(56) Entgegenhaltungen:
- JP-A- 2002 180 268
- US-A1- 2005 022 560

## Beschreibung

Die vorliegende Erfindung betrifft Vorrichtungen zum blasenfreien Transportieren, Homogenisieren oder Konditionieren von Glas- oder Glaskeramikschmelzen.

### Hintergrund der Erfindung

Für die Güte eines Glases, insbesondere eines optischen Glases, ist die Abwesenheit von Gaseinschlüssen bzw. Gasbläschen und Verfärbungen entscheidend für die störungsfreie Transmission elektromagnetischer Strahlung. Ferner wird die Güte eines Glases wesentlich durch dessen Homogenität und die Abwesenheit von Schlieren beeinflusst. Toxische oder zumindest gesundheits- bzw. ökologisch bedenkliche Substanzen, wie beispielsweise Arsen oder Antimon im Glas sollten soweit als möglich vermindert oder sogar vermieden werden.
Für den Umgang mit Schmelzen im Produktions- und Fertigungsbereich, insbesondere in der Glasindustrie, werden vielfach Wannen, Tiegel, Behälter, Transportmittel und Werkzeuge aus Edelmetallen der Platingruppe, deren Legierungen sowie Kieselglas oder Feuerfestkeramiken verwendet.
Ein Beispiel hierfür ist eine Speiserrinne, die im allgemeinen zum Transport der Glasschmelze von einer Schmelzvorrichtung oder einer Läutervorrichtung zu einer Verarbeitungseinrichtung sowie zur Konditionierung, d.h. wenn der Aufschmelz- und Läuterprozess abgeschlossen ist und das Glas auf die gewünschte Formgebungstemperatur gebracht werden muß, benötigt wird.
Aktuell wird bzw. werden Iridium oder Iridiumlegierungen für Bauteile, zum Beispiel beim Herstellen von Glas, verwendet, wenn keine Verunreinigungen durch Korrosion der Bauteile in das Glas gelangen dürfen (DE 1906717) oder die ausgezeichneten mechanischen und thermomechanischen Eigenschaften des Iridiums oder der Iridiumbasislegierungen bei hohen Temperaturen, insbesondere größer als 1600°C, beispielsweise in einem Glasschmelzofen notwendig sind (JP 02-022132). Dies ist auch aus JP2002-180268 und US 2005-0022560 bekannt. Der erste Prozessschritt in der Glasherstellung stellt das Einschmelzen der Ausgangssubstanz in einem Schmelztiegel dar. Um eine Höchstmaß an Homogenität und Blasenfreiheit zu erzielen, bedarf es gründlicher Durchmischung und Entgasung des Glasschmelze. Daher schließt sich im allgemeinen dem Einschmelzen nachfolgend die Läuterung und Homogenisierung der Glasschmelze an. Wesentliches Ziel der Läuterung ist die physikalisch und chemisch in der Schmelze gebundenen Gase aus der Schmelze zu entfernen.
Nach der Läuterung ist die Glasschmelze im Idealfall blasenfrei. Während des Transports der Glasschmelze zu einem weiteren Verarbeitungsschritt sollte ein erneuter Eintrag an Blasen in die bzw. die Neubildung von Blasen Glasschmelze vermieden werden, um eine unerwünschte Qualitätseinbuße des Glases zu vermeiden.

Es ist bekannt, dass die Verwendung von Quarz oder Keramiken als Wandmaterial oder als Schmelzkontaktmaterial einer Transporteinrichtung zur Bildung von Blasen und/oder Schlieren in der Glasschmelze und letztendlich im Glasendprodukt führen kann. Die Schlieren haben im allgemeinen ihren Ursprung in Glasinhomogenitäten mit abweichenden optischen Werten. Die Entstehung von Schlieren kann jedoch durch die Verwendung von Metallen, wie zum Beispiel Platin oder Platinlegierungen, zum Bau oder zumindest zur Auskleidung der Bauteile im Schmelzkontaktbereich vermieden werden.

Platin ist jedoch zum einen teuer. Zum anderen haben Bauteile aus Platin oder Platinlegierungen auch den Nachteil, dass, aufgrund der Korrosivität der Glasschmelze, geringe Mengen Platin oder andere Legierungsbestandteile in die Schmelze eingetragen werden, welche sowohl in ionischer Form als auch fein verteilt in elementarer Form letztendlich im Glasendprodukt vorliegen. Der Eintrag an ionischem oder elementarem Platin in die Glasschmelze führt je nach Konzentration und Teilchengröße im Glasendprodukt zu einer unerwünschten Färbung und einer verminderten Transmission im sichtbaren Bereich der elektromagnetischen Strahlung.

Darüber hinaus ist es bekannt, dass es zur Bildung von Blasen, insbesondere Sauerstoffblasen, an der Kontaktfläche des Platins mit der Schmelze kommt. Somit kommt es in der Transportvorrichtung nach der eigentlichen Läuterung des Glases zu einer Neubildung von Blasen und entsprechend zu einem unerwünschten Neu-Blaseneintrag in die bereits geläuterte Glasschmelze.

Eine mögliche Erklärung für die Neubildung von Blasen in der Glasschmelze, genauer an der Grenzfläche zwischen der Glasschmelze und der Platinwand, basiert auf dem folgenden Ansatz: Bei den in einer Glasschmelze vorherrschenden Temperaturen, erfolgt eine Dissoziation des Wassers in seine Bestandteile Wasserstoff und Sauerstoff, welche entsprechend atomar oder molekular in der Schmelze vorliegen. Im Zentrum der Glasschmelze steht die Dissoziation des Wassers in seine Bestandteile als auch die Umkehrreaktion im Gleichgewicht. Dagegen ist der Wasserstoff in dem Schmelzkontaktbereich der aus Platin bestehenden Wand in der Lage, durch das Platin hindurch auf die schmelzabgewandte Seite der Wand zu diffundieren, während der Sauerstoff in der Schmelze verbleibt. Ist der Wasserstoffgehalt an der Außenseite eines Platinbauteils geringer als an der Innenseite, so erfolgt eine stetige Wasserstoffdiffusion durch das Platinbauteil hindurch nach außen, so dass sich bei der Wasserzersetzung kein Gleichgewichtszustand mehr einstellen kann. Dadurch kommt es zur Anreicherung von Sauerstoff an der schmelzzugewandten Seite des Platinbauteils. Ist die Löslichkeitsgrenze des Sauerstoffs in der Glasschmelze überschritten, so bilden sich Sauerstoffblasen am Platin. Die erneute Blasenbildung wird dabei als sogenanntes Sauerstoffreboil bezeichnet. Die in der Glasschmelze entstandenen Sauerstoffblasen können letztendlich in das herzustellende Glasendprodukt gelangen, wodurch Ausbeute und Qualität des Glases erheblich beeinträchtigt werden, was vor allen Dingen bei optischen Gläsern oder Display-Gläsern nicht tolerabel ist. Ein weiterer Erklärungsansatz geht von einer katalytischen Wirkung des Platins gegenüber dem in der Glassschmelze vorhandenen Wasser aus. Die katalytische Wirkung des Platins beruht hierbei auf einen durch das Platin begünstigten Dissoziation des Wassers in seine Bestandteile.

Betroffen sind davon vor allem Borosilikatgläser, Aluminosilikatgläser und Glaskeramiken. Bei den Borosilikatgläsern neigen die für Pharmazie, Technik und Chemie wichtigen Neutralgläser, aber auch viele andere Borosilikatgläser, die nicht zur Gruppe der Neutralgläser gehören, besonders stark zur Bildung von Sauerstoffblasen. Bei den Aluminosilikatgläsern sind vor allem Gläser betroffen, die bei Displayanwendungen und bei thermisch hochbelasteten Lampen zum Einsatz kommen. Darüber hinaus neigen alle Gläser, die keine ausreichend hohe Konzentration an polyvalenten Ionen enthalten und nicht hinreichend geläutert sind, zur Bildung von Sauerstoffblasen an Platinoberflächen.

Es wurde bereits versucht, das genannte Sauerstoffreboil durch Gegenmaßnahmen zu unterdrücken.

In dem Dokument DE 10231847 ist ein Verfahren beschrieben, bei dem die Wasserzersetzung gezielt in der Läuterwanne an einem sich darin befindlichen Hohlkörper aus Edelmetall erfolgt. Die Wasserzersetzung kann durch Anlegen eines Potentials oder durch Einstellen der Temperatur des Rohres geregelt werden. Durch das Rohr wird der Wasserstoff nach außen abgeführt. Der im Glas verbliebene Sauerstoff steigt als Blasen auf. Dieses Verfahren hat sich jedoch als aufwendig erwiesen.

DE 19955827 beschreibt ein Verfahren zur Unterdrückung der Sauerstoffblasenbildung an der Kontaktfläche Glasschmelze-Edelmetall, bei dem das Edelmetallbauteil mit einer Elektrode, die in einem gewissen Abstand von dem Edelmetallbauteil in der Glasschmelze angeordnet ist, elektrisch leitend verbunden und ein Potentialgefälle erzeugt wird. Wird an dem Edelmetall ein genügend große, elektrisch negative Potentialdifferenz bezüglich der Glasschmelze aufrechterhalten, so wird der nach der Wasserzersetzung und Wasserstoffdiffusion übrig gebliebene Sauerstoff ionisiert. Die Sauerstoffionen sind in unbegrenzter Menge in flüssigem Glas löslich und bilden keine Sauerstoffblasen. Dies Verfahren hat den Nachteil, dass die einzustellende Potentialdifferenz sehr stark von der Zusammensetzung sowohl des Glases als auch des Edelmetalls abhängt und deshalb nur schwer einzustellen ist. Außerdem können Verunreinigungen aufgrund von Elektrodenkorrosion in das Glas gebracht werden, die zu unerwünschten Verfärbungen und zur Veränderung der Glaseigenschaften führen können.

DE 10141585 beschreibt ein Doppelmantelrohr zum Führen von Glasschmelzen, bei dem das innere Rohr und der Hohlraum zwischen dem inneren und dem äußeren Rohr mit der Glasschmelze gefüllt sind. Die Wasserzersetzung erfolgt zwar an den Grenzflächen Edelmetall-Glas, die Glasschmelze zwischen den beiden Rohrwänden verhindert jedoch die Wasserstoffdiffusion aus dem inneren Rohr, sofern auf beiden Seiten des Edelmetallinnenrohres gleiche Wasserstoffpartialdrücke vorherrschen. Dieses Verfahren hat sich jedoch in seiner konstruktiven Umsetzung als aufwendig erwiesen.

In dem Dokumente DE 10032596 wird ein weiteres Verfahren beschrieben, welches die Blasenbildung am Platin vermeidet. Hier wird ein glasführender Kanal aus zwei ineinandergeschobenen Rohren aufgebaut. Im Glaskontakt wird ein nahtloses Rohr, z.B. aus Quarzglas, verwendet. Das äußere Rohr, über das für die Beheizung des Kanals indirekt über elektrische Beheizung erfolgt, besteht aus Edelmetall. Durch das nahtlose Rohr ist die Glasschmelze von dem Edelmetallrohr getrennt. Der Nachteil dieses Verfahrens liegt in der großen Trägheit des Systems bezüglich der Temperatursteuerung.

WO 02/44115 beschreibt, dass die Sauerstoffblasenbildung an Platinmetallen durch eine Beschichtung auf der schmelzabgewandten Seite der Bauteile, die undurchlässig für H₂ oder H₂ und O₂ ist, vermieden werden kann. Als mögliche Beschichtungen sind ein Glas oder ein Glasgemisch genannt. Die Beschichtung dient als Diffusionssperre und soll die Sauerstoffblasenbildung verhindern. Die Nachteile dieses Verfahrens sind, dass das Aufbringen der genannten Beschichtungen sehr aufwendig ist, die Beschichtung fehlerfrei und die Handhabung beim Einbau der Bauteile sehr sorgfältig sein muß, damit keine Fehlstellen entstehen, um eine einwandfreie Funktion der Schicht zu erhalten. Beschädigungen der Schicht, die während des Betriebes auftreten, führen zu einem Versagen des Schutzsystems.

In DE 10003948 wird ein weiteres Verfahren zum Vermeiden von Reboilblasen dargestellt. Es wird gezeigt, dass die Sauerstoffreboilneigung einer Glasschmelze abnimmt, wenn die Glasschmelze vor der Homogenisierung und Konditionierung auf Temperaturen von über 1700°C angehoben wird und wenn die Glasschmelze außerdem polyvalente Ionen wie Vanadium, Cer, Zink, Titan, Eisen, Molybdän oder Europium enthält. Dieses Verfahren hat den Nachteil, dass es nur für bestimmte Gläser anwendbar ist und hohe Temperaturen beim Läutern nur mit hohem apparativen Aufwand erreicht werden können.

Eine weitere Maßnahme zur Verhinderung der Bildung von Sauerstoffblasen besteht in der gezielten Anreicherung der Atmosphäre der glasabgewandten Seite eines Platinbauteils mit Wasserstoff. Dies kann, wie in der US 5785726 beschrieben, durch eine Betropfung der Bauteiloberfläche mit Wasser oder durch Spülen mit einem wasserstoffhaltigen Gas erfolgen. Dadurch soll die Triebkraft für die Wasserstoffdiffusion unterdrückt werden. In der Regel ist jedoch das Prozeßfenster sehr klein, die Wasserzersetzung abhängig von der Glaszusammensetzung, der Temperatur und den Umgebungsbedingungen auf der glasabgewandten Seite des Platinbauteils. Ist der Wasserstoffgehalt an der Grenzfläche Glas-Platin geringer als an der glasabgewandten Seite des Bauteils, diffundiert der Wasserstoff in die Glasschmelze und es kann zu Blasenbildung durch Wasserstoff oder zu Reaktionen des Wasserstoffs mit Glasbestandteilen kommen. Dies kann zu einer Verschlechterung der Glasqualität bis hin zum Produktionsausfall führen. Ein weiteres Problem tritt dadurch auf, dass es an der Edelmetalloberfläche zu lokalen Legierungsbildungen mit durch den Wasserstoff reduzierten Glasbestandteilen wie z.B. Antimon, Arsen, Zinn, Blei, Vanadium, Tellur, Eisen etc. kommen kann. Dies hat zur Folge, dass die mechanische bzw. thermomechanische Stabilität des Edelmetalls vermindert wird oder bei starkem Angriff die Materialstruktur völlig zerstört wird. Dies hat eine geringere Standzeit der Bauteile und damit eine vorzeitige Erneuerung mit entsprechend hohen Kosten zur Folge. Wenn die Temperaturverteilung bei einem Bauteil inhomogen ist, kann dies unterschiedliche Prozessfenster für die kälteren und heißeren Bereiche zur Folge haben, so dass unterschiedliche Atmosphären an der Bauteilaußenseite notwendig sind. In der Praxis hat sich gezeigt, dass der Prozess nur sehr schwer regelbar ist. Trotz Einstellen einer definierten wasserstoffhaltigen Atmosphäre an der glasabgewandten Seite des Platinbauteils ist meistens immer noch Sauerstoffblasenbildung zu beobachten.

Die bekannten Verfahren führen somit entweder zu einer Veränderung der Glaszusammensetzung und damit der Produkteigenschaften und sind deshalb nur in begrenztem Maße anwendbar oder sind technisch aufwendig, müssen überwacht und gesteuert werden und sind entsprechend teuer. Bei Störungen der Steuerung und Regelung entstehen Produktionsausfälle.

### Allgemeine Beschreibung der Erfindung

Vor diesem Hintergrund hat sich die vorliegende Erfindung zur Aufgabe gestellt, eine Vorrichtung zum Transportieren, Homogenisieren und/oder Konditionieren, vorzugsweise von Glas- oder Glaskeramikschmelzen bereitzustellen, welche die oben genannten Nachteile des Standes des Technik weitgehend vermeiden.
Insbesondere soll das Verfahren und die Vorrichtung für das Transportieren, Homogenisieren und/oder Konditionieren optischer Gläser und/oder Display-Gläser geeignet sein.
Dies umfasst dabei insbesondere das Ziel, in der Glasschmelze die Neubildung von Blasen, insbesondere die Neubildung von Sauerstoffblasen, nach der Läuterung zu verhindern oder zumindest die Menge der neugebildeten Blasen in der Glasschmelze auf ein Minimum zu reduzieren. Darüber hinaus sollen das Verfahren und die Vorrichtung zu dessen Ausführung flexibel, d.h. auf verschiedene Glassorten oder Glasschmelzen unterschiedlicher Eigenschaften, vor allen Dingen hinsichtlich Viskosität, Temperatur und/oder Korrosivität der Schmelze, anwendbar sein.
Ferner sollen das Verfahren und die Vorrichtung zur dessen Ausführung wirtschaftlich sinnvoll und kostengünstig zu nutzen sein.

Gelöst wird diese Aufgabe bereits durch eine Wand, einen Boden oder eine Abdeckung eines Schmelztiegels, einer Läuterwanne, einer Rinne oder einer Homogenisierungsvorrichtung oder einer Konditionierungsvorrichtung für Glasschmelzen nach Anspruch 1 sowie durch einen Raum mit einer Wand einer Homogenisierungsvorrichtung oder mit einer Wand, einem Boden oder einer Abdeckung eines Schmelztiegels, einer Läuterwanne, einer Rinne einer Homogenisierungsvorrichtung oder Konditionierungsvorrichtung für Glasschmelzen nach Anspruch 5. Vorteilhafte Ausführungsformen sind Gegenstand der Unteransprüche.

Ein Verfahren zum Transportieren, Homogenisieren und/oder Konditionieren einer anorganischen Schmelze, insbesondere einer Glasschmelze und/oder einer Glaskeramikschmelze wird beschrieben. Das Verfahren beschreibt, dass mittels zumindest eines Abschnitts einer Wand oder einer Wand einer Transportvorrichtung und/oder Homogenisierungsvorrichtung und/oder Konditionierungsvorrichtung, welche mit einer Iridium umfassenden Diffusionsbarriereschicht bereitgestellt wird, eine Verweilzeit der Schmelze in der Transportvorrichtung und/oder Homogenisierungsvorrichtung und/oder Konditionierungsvorrichtung derart eingestellt wird, so dass der Sauerstoffpartialdruck in der Schmelze einen Wert von kleiner als etwa 1 bar aufweist. Dies wird dadurch erreicht, dass die Diffusionsbarriereschicht die Diffusion von Wasserstoff durch die Wand, im Vergleich zu herkömmlichen Wandmaterialien, wie beispielsweise Platin oder Platinlegierungen, zumindest reduziert.
Die Verweilzeit ist hierbei die individuelle Aufenthaltsdauer der Glasschmelze in der Transportvorrichtung und/oder Homogenisierungsvorrichtung und/oder Konditionierungsvorrichtung. Die Verweilzeit kann unter anderem durch die Flußgeschwindigkeit der Schmelze geregelt und/oder gesteuert werden. Der Sauerstoffpartialdruck gibt die Konzentration an, mit welcher der Sauerstoff in der Glasschmelze vorliegt.

Das Verfahren beschreibt vorteilhafterweise, dass die Neubildung von Blasen nach der Läuterung an einer Kontaktfläche der Schmelze mit einer Wand der Transportvorrichtung, Homogenisierungsvorrichtung und/oder Konditionierungsvorrichtung mittels einer Diffusionsbarriereschicht, welche als Material Iridium umfasst, zumindest reduziert wird oder sogar vollständig vermieden wird.

Insbesondere wird durch die Diffusionsbarriereschicht die Diffusion von Wasserstoff durch die Wand der Transportvorrichtung, Homogenisierungsvorrichtung und/oder Konditionierungsvorrichtung zumindest reduziert oder sogar unterdrückt. Eine Diffusionsbarriereschicht im Sinne der Anmeldung ist ein Hindernis für die Diffusion von Gasen, vorzugsweise des Wasserstoffs von der einen, insbesondere schmelzzugewandten, Seite der Diffusionsbarriereschicht zur anderen, insbesondere schmelzabgewandten, Seite der Diffusionsbarriereschicht.

Gemäß der Erfindung wird die schmelzzugewandte Seite der Diffusionsbarriereschicht zumindest abschnittsweise mit einer Schmelzkontaktfläche bereitgestellt. Die Diffusionsbarriereschicht bildet in diesem Fall die den Schmelzkontakt bildende Schicht der Wand oder die Schmelzkontaktschicht der Wand. Die Schmelze wird also in Kontakt mit einem Medium zur Verhinderung der Neublasenbildung gebracht, wobei zumindest ein Abschnitt der Schmelzkontaktfläche als ein Iridium umfassendes Material bereitgestellt wird.

In einer bevorzugten Ausführungsform wird die Diffusionsbarriereschicht zumindest im Bereich der Schmelzkontaktschicht als Bestandteil der Wände der Transportvorrichtung und/oder Homogenisierungsvorrichtung und/oder Konditionierungsvorrichtung bereitgestellt. Die Vorrichtung hat dabei Wände, welche zumindest im Bereich der Schmelzkontaktschicht ein Iridium umfassendes Material aufweisen. In einer vorteilhafterweise besonders einfachen Weiterbildung bestehen die Wände der Transportvorrichtung und/oder Homogenisierungsvorrichtung und/oder Konditionierungsvorrichtung aus Iridium.

Unter einer Schmelzkontaktschicht wird eine Grenzschicht verstanden, die zumindest eine Schmelzkontaktfläche aufweist oder zumindest abschnittsweise über ihre Oberfläche mit der Schmelze in Kontakt steht oder in Berührung kommt. Die Wände oder die genannten Transport-, Homogenisierungs- und/oder Konditionierungsvorrichtungen im Sinne der vorliegenden Anmeldung umfassen nicht nur die entsprechenden Behälter, Wannen oder Rohre, sondern auch entsprechende Bauteile, die mit der Schmelze in Kontakt stehen oder zumindest eine Schmelzkontaktfläche aufweisen, wie beispielsweise Rührteile, Rinnen, Speiser, Nadeln, Düsen, Tweels, Glasstandsmesser und/oder Rührer.

Iridium oder Iridium-Legierungen weist bzw. weisen eine wesentlich höhere chemische Beständigkeit gegenüber Glasschmelzen auf als Edelmetall Platin oder Platin-Legierungen. Weiterhin ist die thermische Belastbarkeit des Iridiums oder seiner Legierungen wesentlich höher als die von Platin beziehungsweise Platin-Legierungen. Iridiumbauteile können im Kontakt mit Glasschmelzen bis zu einer Temperatur von ca. 2200°C erhitzt werden. In vorteilhafter Weise ist selbst bei diesen hohen Temperaturen der Angriff der Glasschmelzen auf das Metall äußerst gering.

Die erhöhte Temperaturbelastbarkeit des Iridiums oder einer Iridium-Legierung beispielsweise gegenüber Platin oder Platin-Legierung ist in der erfindungsgemäßen Transport-, Homogenisierungs- und/oder Konditionierungsvorrichtungen nicht von zentraler Bedeutung. Der Betrieb des erfindungsgemäßen Verfahrens erfolgt bei einer Temperatur in der Schmelze von etwa 700°C bis etwa 1700°C, bevorzugt von 1100°C bis etwa 1700°C. In einer bevorzugten Ausführungsform erfolgt der Betrieb bei einer Temperatur von etwa 1300°C bis etwa 1500°C.

Zudem hat im Glas gelöstes Iridium keinen wesentlichen färbenden Einfluss im sichtbaren Bereich und bewirkt somit keine wesentliche Verfärbung der Gläser. Dies erweist sich als besonders vorteilhaft in einer Ausführungsform, in welcher die Iridium umfassende Diffusionsbarriereschicht über ihre schmelzzugewandte Seite eine Schmelzkontaktfläche aufweist.

Zudem zeigen durchgeführte Versuche einen nachweisbaren Eintrag von Platin in Gläser, welche bei einer Temperatur von 1480°C über 1 Stunde in einem PtIr1-Tiegel (99 Gew.-% Pt, 1 Gew.-% Ir) inkubiert worden waren von 9 ppm, während in den Gläsern kein Iridium nachweisbar war. In einer Schmelze, welche bei unter den gleichen Bedingungen in einem Iridium-Tiegel inkubiert worden war, waren 4 ppm Iridium neben 0,3 ppm Platin nachweisbar. Das Iridium entspricht der in der WO 2004/007782 A1 angegebenen Spezifikation. Dieses Ergebnis belegt, dass bei der Verwendung von Iridium als Schmelzkontaktmaterial oder in der Schmelzkontaktfläche des Tiegels ein wesentlich geringerer Materialabtrag aus der Tiegelwand stattfindet und somit weniger metallische Bestandteile sowie metallische Ionen in dem Endprodukt, beziehungsweise Glas nachweisbar sind. Dies resultiert vorteilhaft in einer längeren Standzeit eines Iridium-Tiegels. Darüber hinaus haben die Erfinder zum einen erkannt, dass die Bildung von Schlieren in der Glasschmelze an einer Oberfläche, welche als Material Iridium oder einer Iridiumlegierung aufweist, erheblich gemindert oder sogar vollständig vermieden werden kann. Zum anderen haben die Erfinder festgestellt, dass die Bildung von Sauerstoffblasen an einer Oberfläche, welche als Material Iridium oder eine Iridiumlegierung aufweist, erheblich reduziert oder sogar vollständig unterdrückt ist, im Gegensatz zu einer Oberfläche, welche Platin oder eine stark platinhaltige Legierung aufweist.

Die Schmelze strömt, vorzugsweise nach Läuterung, durch die entsprechende Transport-, Homogenisierungs- und/oder, Konditionierungsvorrichtung, welche jeweils beispielsweise als eine Wanne, ein Kanal oder ein Behälter ausgestaltet ist. Die Neubildung von Blasen an herkömmlichen Platinwänden oder Platinlegierungswänden wird mittels der Iridium umfassenden Diffusionsbarriereschicht, welche auf der schmelzabgewandten Seite der Platinwand angeordnet ist, reduziert oder sogar vollständig unterdrückt.

Die Erfinder haben erkannt, dass die Bildung von Blasen wirksam reduziert werden kann, wenn die Diffusionsbarriereschicht mit einem Anteil an Iridium von etwa 10% bis etwa 100%, bevorzugt von etwa 30% bis 100%, besonders bevorzugt von etwa 50% bis 100% Gewichtsprozent bereitgestellt wird.

Entspricht der Iridiumanteil einem Anteil von kleiner als etwa 98% bis etwa 100% Gewichtsprozent, so liegt eine Iridiumlegierung vor. Entsprechend werden als weitere Materialien für die die Diffusionsbarriere bildende Schicht oder für die Diffusionsbarriereschicht zumindest Platin, Rhodium, Gold, Yttrium, Ruthenium, Palladium, Zirkonium, Niob, Wolfram, Tantal, Hafnium, Titan, Lanthan, Molybdän, Rhenium, Aluminium und/oder Silizium oder eine Kombination der genannten Materialien, dabei insbesondere zumindest zwei der genannten Materialien, bereitgestellt.

Ohne an eine Theorie gebunden zu sein, wird davon ausgegangen, dass der Unterschied zwischen Iridium und Platin darin begründet ist, dass Iridium aufgrund seiner hohen Dichte eine diffusionsreduzierende oder sogar diffusionshemmende Wirkung für den in der Schmelze vorhandenen Wasserstoff aufweist. Somit stellt Iridium eine Barriere für die Wasserstoffdiffusion dar. Die Dissoziation des Wassers in seine Bestandteile als auch die entsprechende Umkehrreaktion verbleibt folglich auch im Wandbereich im Gleichgewicht. Es kann sich kein Sauerstoff anreichern und somit keine Blasen bilden. Eine detaillierte Beschreibung diesbezüglich findet sich beim Ausführungsbeispiel. Unter der Annahme einer katalytischen Wirkung des Platins gegenüber dem in der Glassschmelze vorhandenen Wasser, könnte Iridium eben diese katalytische Wirkung gerade nicht aufweisen.

In einer Ausführungsform wird die Diffusionsbarriereschicht derart bereitgestellt, dass diese mit einem Anteil an Iridium, der, ausgehend von der schmelzzugewandten Seite der Diffusionsbarriereschicht in Richtung einer schmelzabgewandten Seite der Diffusionsbarriereschicht graduell abnimmt. Die schmelzabgewandte Seite ist dabei die Seite oder der Bereich der Wand, welche bzw. welcher zur Außenseite der Wand hin ausgerichtet ist oder keine Kontaktfläche mit der Schmelze aufweist. Der Anteil an Iridium ist somit in der Diffusionsbarriereschicht nicht homogen verteilt, sondern nimmt ausgehend von der schmelzzugewandten Seite der Diffusionsbarriereschicht senkrecht zur Oberfläche der Schmelzkontaktfläche der Wand in Richtung der schmelzabgewandten Seite der Diffusionsbarriereschicht nach und nach ab. Der Gehalt an Iridium kann zum einen gleichmäßig oder in diskreten Schritten stufenweise abnehmen. Die Variation des Iridiumgehalts ermöglicht ein gezieltes Einstellen der chemischen Beständigkeit, vorzugsweise gegenüber der Schmelze und der Diffusionseigenschaften, insbesondere hinsichtlich des Gases Wasserstoff.

Entsprechend ist die Schicht mit dem graduell abnehmenden Gehalt an Iridium dadurch gekennzeichnet, dass das Iridium in der schmelzzugewandten Seite der Diffusionsbarriereschicht mit einem Anteil von etwa 10% bis etwa 100%, bevorzugt von etwa 30% bis etwa 100%, besonders bevorzugt von etwa 50% bis etwa 100% Gewichtsprozent bereitgestellt wird und dass Iridium in der schmelzabgewandten Seite der Diffusionsbarriereschicht mit einem Anteil von weniger als etwa 5%, bevorzugt von weniger als etwa 2,5%, besonders bevorzugt von weniger als etwa 1,5% Gewichtsprozent bereitgestellt wird.

In einer weiteren Ausführungsform wird die Diffusionsbarriereschicht mit einem Anteil an Iridium bereitgestellt, der, ausgehend von einer schmelzzugewandten der Diffusionsbarriereschicht in Richtung einer schmelzabgewandten Seite der Diffusionsbarriereschicht, insbesondere graduell, zunimmt. Die hier beschriebene Diffusionsbarriereschicht wird somit als ein Inverses der im vorstehenden Absatz beschriebenen Diffusionsbarriereschicht bereitgestellt. Sie weist im wesentlichen die gleichen Eigenschaften auf. Sie unterscheidet sich jedoch dadurch, dass Iridium in der schmelzzugewandten Seite der Diffusionsbarriereschicht, mit einem Anteil von weniger als etwa 5 Gew.%, bevorzugt von weniger als etwa 2,5 Gew.%, besonders bevorzugt von weniger als 1,5 Gew.% und in der schmelzabgewandten Seite der Diffusionsbarriereschicht mit einem Anteil von 10 Gew.% bis etwa 100 Gew.%, bevorzugt von etwa 30 Gew.% bis 100 Gew.%, besonders bevorzugt von etwa 50 Gew.% bis 100 Gew.% bereitgestellt wird.

In einer besonderen Ausführungsform der vorliegenden Erfindung wird die Diffusionsbarriereschicht derart bereitgestellt, dass sie vollständig aus Iridium oder entsprechend einem Iridiumanteil von etwa 98% bis 100% Gewichtsprozent besteht.

Die Diffusionsbarriereschicht kann dabei derart gebildet oder ausgestaltet werden, dass sie sogar direkt, d.h. ohne einen weiteren Träger oder ohne eine Trägerschicht, die Wand bildet. Mit anderen Worten, die Wand besteht aus einem einschichtigen System oder einem Einschichtsystem und die Diffusionsbarriereschicht ist so dick ausgebildet, dass sie alleine die Wand bildet. Entsprechend dem erfindungsgemäßen Einschichtsystem wird die Wand oder die Diffusionsbarriereschicht mit einer Dicke von etwa 0,1 mm bis etwa 500 mm, bevorzugt von etwa 0,2 mm bis etwa 200 mm, besonders bevorzugt von etwa 0,3 mm bis etwa 10 mm bereitgestellt.

Erfindungsgemäß ist es jedoch nicht erforderlich, die Wand als ein Einschichtsystem bereitzustellen. Die Wand kann ebenso schichtweise gebildet werden oder wird durch eine Anordnung einzelner Schichten aufgebaut oder gebildet.

Ist die Wand entsprechend als ein Mehrschichtsystem, d.h. die Wand umfasst zumindest ein zweischichtiges System, aufgebaut, so kennzeichnet sie sich dadurch, dass die Wand mit zumindest einer Trägerschicht bereitgestellt wird. Der Trägerschicht kommt dabei im wesentlichen die tragende Funktion einer Wand zu, d.h. die Trägerschicht verleiht der Wand im wesentlichen ihre mechanische Stabilität. Mit anderen Worten, die Trägerschicht ist das Gerüst der Wand, auf der oder an der bei Bedarf weitere Schichten abgeschieden, angebracht und/oder aufgebracht sind.

Die Trägerschicht wird durch zumindest ein refraktäres Material gebildet. Ein refraktäres Material im Sinne der Anmeldung ist ein hitzebeständiges oder thermisch stabiles Material. Als refraktäres Material wird eine Gruppe an Materialien bereitgestellt, welche einen Stein, vorzugsweise einen Feuerfeststein, eine Keramik, vorzugsweise eine Feuerfestkeramik, ein Glas, insbesondere Kieselglas, eine Glaskeramik, ein Metall, vorzugsweise Pt oder Rh, eine Refraktärmetall und/oder eine Metall-Legierung, vorzugsweise Stahl, Edelstahl, Ni-Basislegierung, Co-Basislegierung, Pt und/oder Rh, umfasst. In einer alternativen Ausführungsform wird die Trägerschicht durch die Diffusionsbarriereschicht gebildet wird. Die Gruppe der Refraktärmetalle umfasst die folgenden Metalle: Titan, Zirkonium, Hafnium, Vanadium, Chrom, Wolfram, Molybdän, Tantal, Niob und Rhenium.

Um eine ausreichende mechanische Stabilität zu gewährleisten, wird, abhängig von dem verwendeten Material, die Trägerschicht vorzugsweise mit einer Dicke von etwa 0,05 mm bis etwa 50 mm, bevorzugt von etwa 0,05 mm bis etwa 10 mm, besonders bevorzugt von etwa 0,1 mm bis etwa 1 mm bereitgestellt. Die Trägerschicht kann je nach Anforderung auch mit einer Dicke von bis zu etwa 0,5 m oder etwa 1 m bereitgestellt werden.

In einer Ausführungsform wird auf der Trägerschicht die Diffusionsbarriereschicht aufgebracht. In einer weiteren Ausführungsform ist die Wand dadurch gekennzeichnet, dass sie mit zumindest einer Schutzschicht bereitgestellt wird. Diese Schutzschicht verhindert eine Oxidation der Diffusionsbarriereschicht durch den in der umgebenden Luft enthaltenen Sauerstoff, da Iridium oberhalb von 1000°C gegenüber Sauerstoff nicht oxidationsstabil ist. Die Schutzschicht weist dabei eine diffusionshemmende oder sogar -sperrende Wirkung gegenüber dem Sauerstoff auf. Die Schutzschicht ist eine Oxidationsschutzschicht.

Erfindungsgemäß können auch die Funktionen hinsichtlich chemischer Beständigkeit gegenüber der Schmelze, Diffusion und/oder Stabilität bei geeigneter Wahl des Materials auch mittels nur einer Schicht realisiert werden.

Für das Bilden oder für das Abscheiden der Diffusionsbarriereschicht und/oder der Schutzschicht bieten sich eine Vielzahl von Verfahren an. Um jedoch eine besonders dichte, feste und gleichmäßige Schicht erzeugen zu können, werden die genannten Schichten mittels PVD, insbesondere mittels Sputtern, Verdampfen und/oder Ionenplattieren, abgeschieden. In einer weiteren Ausführungsform werden die genannten Schichten mittels CVD, insbesondere PICVD, Giessen, Plattieren und/oder Galvanisieren abgeschieden oder aufgebracht. In einer bevorzugten Ausführungsform werden die Diffusionsbarriereschicht und/oder die Schutzschicht mittels eines thermisches Spritzverfahrens, insbesondere mittels Lichtbogen- und/oder Plasmaspritzen, abgeschieden. Die Diffusionsbarriereschicht und/oder die Schutzschicht wird bzw. werden dabei mit einer Dicke von etwa 0,1 µm bis etwa 30000 µm, bevorzugt von etwa 1 µm bis etwa 1000 µm, besonders bevorzugt von etwa 50 µm bis etwa 500 µm abgeschieden.

Die Schutzschicht wird durch zumindest ein refraktäres Material gebildet, umfassend eine Keramik, ein Glas, insbesondere Mullit-Glas, ein Metalloxid, insbesondere Aluminiumoxid, Kalziumoxid, Ceriumdioxid, Dichromatoxid, Hafniumdioxid, Magnesiumoxid, Siliziumdioxid, Thoriumdioxid, Zirkoniumoxid und/oder Spinell, ein Metall, vorzugsweise Pt, Rh, Ru, Zirkon und/oder Palladium, ein Refraktärmetall, eine Metall-Legierung, vorzugsweise umfassend Stahl, Edelstahl, Pt und/oder Rh, Ni-Basislegierung und/oder Co-Basislegierung oder eine Kombination der genannten Materialien, dabei insbesondere zumindest zwei der genannten Materialien.

Um die Diffusionsbarriereschicht vor einer Oxidation durch den in der Luft enthaltenen Sauerstoff zu schützen, kann im Bereich einer freiliegenden, d.h. im Kontakt mit der Umgebung stehenden, schmelzabgewandten Seite der Diffusionsbarriereschicht oder in dem freiliegenden Bereich einer Schmelzkontaktschicht der Diffusionsbarriereschicht eine definierte Atmosphäre erzeugt werden. Die definierte Atmosphäre wird mittels eines Fluids, insbesondere eines Gases, vorzugsweise Stickstoff, eines Edelgases, vorzugsweise Argon oder Helium und/oder eines Formiergases, vorzugsweise Formiergas (95/5) oder (90/10) erzeugt. Über den Fluss des Fluids kann zudem eine Temperatursteuerung der Schmelze erfolgen. Auch die Verwendung einer Mischung der vorstehend genannten Gase ist sinnvoll. Die Vorrichtung zum Transportieren, Homogenisieren und/oder Konditionieren kann dabei vollständig in einem Raum angeordnet sein, welcher die Vorrichtung zum Transportieren, Homogenisieren und/oder Konditionieren von der Umgebung trennt und in welchem die definierte Atmosphäre erzeugt oder angelegt wird.

In einer Ausführungsform wird die definierte Atmosphäre mittels eines fluiden, insbesondere gasförmigen, Vorhangs bereitgestellt. Somit wird nur lokal im Bereich der freiliegenden schmelzabgewandten Seite der Diffusionsbarriereschicht die definierte Atmosphäre erzeugt. Das Fluid wird dabei in einem Rohrsystem, Kanälen und/oder einem porösen Material, vorzugsweise einer Schüttung, Mörtel, einer Gießmasse und/oder Stampfmasse, geführt. Bevorzugte Ausführungsformen bilden keramische Oxide.

Zudem wird die Erfindung durch eine Vorrichtung zur Herstellung eines Glases beschrieben, umfassend
- einen Schmelztiegel zum Aufschmelzen eines Gemenges,
- einen Läutertiegel zum Läutern der Glasschmelze und
- eine Vorrichtung zum Transportieren und/oder Homogenisieren (6) und/oder Konditionieren.

Die Vorrichtung zur Herstellung des Glases ist dadurch gekennzeichnet, dass zumindest ein Abschnitt einer Wand der Transportvorrichtung, Homogenisierungsvorrichtung und/oder Konditionierungsvorrichtung eine Iridium umfassende Diffusionsbarriereschicht aufweist, welche die Diffusion von Wasserstoff verringert, wobei die Verweilzeit der Glasschmelze in der Vorrichtung zum Transportieren und/oder Homogenisieren und/oder Konditionieren derart eingestellt ist, dass die Diffusionsbarriereschicht die Diffusion von Wasserstoff durch die Wand zumindest reduziert und der Sauerstoffpartialdruck in der Glasschmelze einen Wert von kleiner 1 bar aufweist, so dass eine Neubildung von Blasen nach dem Läutern reduziert ist.

Weiterhin umfasst die vorliegende Erfindung eine Vorrichtung zum Transportieren, Homogenisieren und Konditionieren einer Schmelze, insbesondere einer Glasschmelze und/oder einer Glaskeramikschmelze welche dadurch gekennzeichnet ist, dass zumindest ein Abschnitt einer Wand der Transportvorrichtung, Homogenisierungsvorrichtung und/oder Konditionierungsvorrichtung zumindest eine als Bestandteil zumindest Iridium aufweisende Diffusionsbarriereschicht umfasst. Die Diffusionsbarriereschicht verringert oder reduziert die Diffusion von Wasserstoff durch die Wand der Transportvorrichtung, Homogenisierungsvorrichtung und/oder Konditionierungsvorrichtung gegenüber einer herkömmlichen Wand aus Platin oder einer Platinlegierung. Die Vorrichtung eignet sich insbesondere zum Ausführen des vorstehend beschriebenen Verfahrens.

Vorzugsweise stellt die Diffusionsbarriereschicht eine Diffusionsbarriereschicht für Wasserstoff dar. Eine Diffusionsbarriereschicht im Sinne der Anmeldung ist ein Hindernis für die Diffusion des Wasserstoffs von der einen, insbesondere schmelzzugewandten, Seite der Diffusionsbarriereschicht zur anderen, insbesondere schmelzabgewandten, Seite der Diffusionsbarriereschicht.

Durch eine Diffusionsbarriereschicht wird dabei die Diffusion des Wasserstoffs durch die Diffusionsbarriereschicht zumindest reduziert. Die Diffusionsbarriereschicht weist gegenüber Platin, einer Platinlegierung oder gegenüber einer Platinwand, einer Platinelegierungswand eine zumindest reduzierte Wasserstoffpermeabilität auf.

In einer erfindungsgemäßen Ausführungsform ist die schmelzzugewandte Seite der Diffusionsbarriereschicht zumindest abschnittsweise die Schmelzkontaktfläche der Wand der Vorrichtung zum Transportieren, Homogenisieren und Konditionieren.

In einer bevorzugten Ausführungsform ist die Diffusionsbarriereschicht zumindest im Bereich der Schmelzkontaktschicht als Bestandteil der Wände der Transportvorrichtung und/oder Homogenisierungsvorrichtung und/oder Konditionierungsvorrichtung ausgebildet. Die Vorrichtung hat dabei Wände, welche zumindest im Bereich der Schmelzkontaktschicht ein Iridium umfassendes Material aufweisen. In einer vorteilhafterweise besonders einfachen Weiterbildung bestehen die Wände der Transportvorrichtung und/oder Homogenisierungsvorrichtung und/oder Konditionierungsvorrichtung aus Iridium.

Die Vorrichtung kennzeichnet sich dadurch, dass die Diffusionsbarriereschicht einen Anteil an Iridium von etwa 10% bis etwa 100%, bevorzugt von etwa 30% bis 100%, besonders bevorzugt von etwa 50% bis 100% Gewichtsprozent aufweist. Die Diffusionsbarriereschicht kann somit aus Iridium bestehen. Liegt dagegen die Diffusionsbarriereschicht als eine Legierung von Iridium vor, so umfasst sie zumindest Platin, Rhodium, Gold, Yttrium, Ruthenium, Palladium, Zirkonium, Niob, Wolfram, Tantal, Hafnium, Titan, Lanthan, Molybdän, Rhenium, Aluminium und/oder Silizium oder eine Kombination der genannten Materialien, dabei insbesondere zumindest zwei der genannten Materialien.

In einer Ausführungsform weist die Diffusionsbarriereschicht einen Anteil an Iridium auf, der, ausgehend von der schmelzzugewandten Seite der Diffusionsbarriereschicht in Richtung der schmelzabgewandten Seite der Diffusionsbarriereschicht, graduell abnimmt. Die Diffusionsbarriereschicht weist dabei einen Anteil an Iridium in der schmelzzugewandten Seite der Diffusionsbarriereschicht von etwa 10% bis etwa 100%, bevorzugt von etwa 30% bis 100%, besonders bevorzugt von etwa 50% bis 100% Gewichtsprozent auf, während der Anteil an Iridium in der von der Schmelze abgewandten Seite der Diffusionsbarriereschicht einen Anteil von weniger als etwa 5%, bevorzugt von weniger als etwa 2,5%, besonders bevorzugt von weniger als 1,5% (Gewichtsprozent) beträgt. Eine weitere erfindungsgemäße Ausführungsform ist dadurch gekennzeichnet, dass die Diffusionsbarriereschicht einen Anteil an Iridium aufweist, der, ausgehend von einer schmelzzugewandten Seite der Diffusionsbarriereschicht in Richtung einer schmelzabgewandten Seite der Diffusionsbarriereschicht, insbesondere graduell, zunimmt. In der schmelzzugewandten Seite der Diffusionsbarriereschicht weist Iridium einen Anteil von weniger als etwa 5 Gew.%, bevorzugt von weniger als etwa 2,5 Gew.%, besonders bevorzugt von weniger als 1 Gew.% auf. In der schmelzabgewandten Seite der Diffusionsbarriereschicht weist Iridium einen Anteil von etwa 10 Gew.% bis etwa 100 Gew.%, bevorzugt von etwa 30 Gew.% bis 100 Gew.%, besonders bevorzugt von etwa 50 Gew.% bis 100 Gew.% auf.

In einer weiteren Ausführungsform wird dabei die Wand selbst nur durch die Diffusionsbarriereschicht, die dann eine entsprechende Dicke aufweist, gebildet. Die Wand weist dabei eine Dicke von etwa 0,1 mm bis etwa 5 mm, bevorzugt von etwa 0,2 mm bis etwa 2 mm auf. In einer besonders bevorzugten Ausführungsform weist die Wand eine Dicke von etwa 0,3 mm bis etwa 1 mm auf.

Ferner kann in einer weiteren Ausführungsform der vorliegenden Erfindung die Wand nicht nur aus einer Schicht bestehen sondern aus einer Anordnung einzelner Schichten, somit zumindest zweischichtig, aufgebaut sein.

Entsprechend weist die Wand zumindest eine Trägerschicht auf. Die Trägerschicht ist gebildet oder aufgebaut aus zumindest einem refraktären Material. Das refraktäre Material umfasst einen Stein, vorzugsweise eine Feuerfeststein, eine Keramik, vorzugsweise eine Feuerfestkeramik, ein Glas, insbesondere Kieselglas, eine Glaskeramik, ein Metall, vorzugsweise Pt oder Rh, ein Refraktärmetall und/oder eine Metall-Legierung, vorzugsweise umfassend Stahl, Edelstahl, Ni-Basislegierung, Co-Basislegierung Pt und/oder Rh. In einer weiteren erfindungsgemäßen Ausführungsform umfasst die Trägerschicht oder ist die Trägerschicht die Diffusionsbarriereschicht. Je nach Ausführungsform kann die Trägerschicht eine Dicke von bis zu etwa 0,5 m oder etwa 1 m habe. In einer bevorzugten Ausführungsform weist die Trägerschicht eine Dicke von etwa 0,05 mm bis etwa 50 mm, bevorzugt von etwa 0,05 mm bis etwa 10 mm, besonders bevorzugt von etwa 0,1 mm bis etwa 1 mm auf.

In einer weiteren Ausführungsform im Fall eines zumindest zweischichtigen Aufbaus der Wand weist diese zumindest eine Schutzschicht oder in dem Fall, in dem die Diffusionsbarriereschicht nicht die Trägerschicht bildet, ist die Diffusionsbarriereschicht ist auf der Trägerschicht angeordnet. Die Diffusionsbarriereschicht und/oder die Schutzschicht ist dabei mittels PVD, insbesondere mittels Sputtern, Verdampfen und/oder Ionenplattieren, auf einer Trägerschicht abgeschieden oder aufgetragen. Die Diffusionsbarriereschicht und/oder die Schutzschicht können zudem mittels CVD, insbesondere PICVD, Giessen, Plattieren, und/oder Galvanisieren oder mittels eines thermisches Spritzverfahrens, insbesondere mittels Lichtbogen- und/oder Plasmaspritzen, abgeschieden sein. Die Diffusionsbarriereschicht und/oder die Schutzschicht weisen erfindungsgemäß eine Dicke von etwa 0,1 µm bis etwa 30000 µm, bevorzugt von etwa 1 µm bis etwa 1000 µm, besonders bevorzugt von etwa 50 µm bis etwa 500 µm auf. Die Schutzschicht weist dabei zumindest ein refraktäres Material auf.

Das refraktäre Material umfasst dabei eine Keramik, Glas, insbesondere Mullit-Glas, ein Metalloxid, insbesondere Aluminiumoxid, Kalziumoxid, Ceriumdioxid, Dichromatoxid, Hafniumdioxid, Magnesiumoxid, Siliziumdioxid, Thoriumdioxid, Zirkoniumoxid und/oder Spinell, ein Metall, vorzugsweise Pt, Pd, Ru, Zirkon und/oder Rh, ein Refraktärmetall und/oder eine Metall-Legierung, vorzugsweise umfassend Stahl, Edelstahl, Ni-Basislegierung, Co-Basislegierung Pt und/oder Rh. Je nach Ausführungsform bildet bzw. bilden die Diffusionsbarriereschicht und/oder die Schutzschicht mit der Trägerschicht und/oder zueinander eine stoffschlüssige Verbindung aus.

Entsprechend einer weiteren Ausführungsform ist die Diffusionsbarriereschicht in einer definierten Atmosphäre, welche die bereits beschriebenen Eigenschaften aufweist, angeordnet. Die definierte Atmosphäre umfasst dabei ein Fluid, insbesondere ein Gas, vorzugsweise Stickstoff, ein Edelgas, vorzugsweise Argon oder Helium und/oder ein Formiergas.
In einer Ausführungsform weist die definierte Atmosphäre einen fluiden, insbesondere gasförmigen, Vorhang auf. Somit ist nur lokal im Bereich der freiliegenden schmelzabgewandten Seite der Diffusionsbarriereschicht die definierte Atmosphäre vorhanden. Das Fluid ist dabei in einem Rohrsystem, in Kanälen und/oder in einem porösen Material, vorzugsweise einer Schüttung, Mörtel, einer Gießmasse und/oder Stampfmasse, geführt. Bevorzugte Ausführungsformen bilden keramische Oxide.

Die Vorrichtungen gemäß der vorliegenden Erfindung sind insbesondere geeignet zum Transportieren, Homogenisieren und/oder Konditionieren von Borosilikatgläsern, Aluminosilikatgläsern, Alumoborosilikatgläsern, Alumosiliziumsilikatgläsern, Alumolithiumsilikatgläsern, optischen Gläsern, Glaskeramiken, und/oder Gläser mit einem Gehalt an polyvalenten Ionen von kleiner als etwa 5 % Gew.%. Anwendungen finden die genannten Gläser beispielsweise in Displays, Flachglas, optischen Glaselementen, Glaskeramik-Kochflächen, Kaminsichtscheiben, thermisch hoch belastenden Lampen, technischen Bauteilen mit hohen thermischen Anforderungen, im Brandschutz und/oder in der Pharmazie. Die hier genannten Gläser und Anwendungen sind beispielhaft zu verstehen und beschränken sich keinesfalls auf die genannte Auswahl.

Weiterhin wird ein Glas, insbesondere ein optisches Glas beschrieben, welches mit dem erfindungsgemäßen Verfahren oder mittels der erfindungsgemäßen Vorrichtung herstellbar oder insbesondere hergestellt ist. Das genannte Glas zeichnet sich dadurch aus, dass zumindest die im Glas enthaltenen Blasen einen Blasendurchmesser von kleiner als etwa 25 µm, bevorzugt von kleiner als etwa 10 µm, besonders bevorzugt von kleiner als etwa 5 µm aufweisen. Blasen der genannten Abmessungen haben eine im wesentlichen vernachlässigbaren Einfluß auf die optischen und/oder mechanischen Eigenschaften eines mit dem erfindungsgemäßen Vorrichtung hergestellten optischen Glaselementes. Der Blaseneinschluss wird mittels einer visuellen Untersuchung festgestellt. Dabei wird das Glas mit einer Unterseite auf einem schwarzen Untergrund plaziert und von der Seite beleuchtet. Von Oberseite des Glases in Richtung des schwarzen Untergrundes wird das Glas betrachtet. Die Blasen werden als helle Punkte sichtbar. Die Größe der Blasen wird mittels einer Skala unter einem Mikroskop gemessen.
Im Glas vorhandene Blasen müssen dabei nicht immer nur Sauerstoff als Gas enthalten. Der Sauerstoff kann beispielsweise auch gegen andere Bestandteile der Schmelze ausgetauscht sein, so dass auch sauerstoffhaltige Gase in den Blasen, wie beispielsweise CO₂, N₂, SO₂, enthalten sein können.

Der Blasendurchmesser kann beispielsweise als Durchmesser einer als kugelförmig angenommenen Blase bestimmt werden. Auch kann die längste Erstreckung der Blase zur Bestimmung des Blasendurchmessers herangezogen werden.
Entspricht die schmelzzugewandte Seite der Diffusionsbarriereschicht der Schmelzkontaktfläche der Wand, so zeichnen sich die mittels der erfindungsgemäßen Vorrichtung hergestellten Gläser, neben der Qualität hinsichtlich Blasenfreiheit, durch einen verminderten Eintrag an unerwünschten färbenden Substanzen, insbesondere an elementarem oder ionischem Platin, aus. Weist die Diffusionsbarriereschicht eine Schmelzkontaktfläche auf, enthalten die Gläser einen Anteil an Iridium von 1 ppm bis 500 ppm, bevorzugt von 1 ppm bis 100 ppm, besonders bevorzugt von 2 ppm bis 20 ppm. Übernimmt die Diffusionsbarriereschicht die Funktion einer Schutzschicht für eine Schmelzkontaktfläche einer Platin- oder Platinlegierungswand, enthalten die Gläser einen Anteil an Platin von weniger als 50 ppm, bevorzugt von weniger als 20 ppm, besonders bevorzugt von weniger als 10 ppm.

Ferner wird die Verwendung von Iridium als zumindest ein Bestandteil einer Diffusionsbarriereschicht einer Wand in einer Vorrichtung und/oder in einem Verfahren zum Transportieren, Homogenisieren und/oder Konditionieren einer Schmelze, insbesondere einer Glasschmelze und/oder einer Glaskeramikschmelze beschrieben, wobei eine Verweilzeit der Schmelze in der Transportvorrichtung und/oder Homogenisierungsvorrichtung und/oder Konditionierungsvorrichtung derart eingestellt wird, so dass der Sauerstoffpartialdruck in der Schmelze einen Wert von kleiner etwa 1 bar aufweist.

Wird die Schmelzkontaktfläche der Wand durch Platin oder eine Platinlegierung gebildet oder besteht die Wand aus Platin oder einer Platinlegierung, so kann die Neuentstehung von Blasen nach der Läuterung durch ein Ummanteln oder Verkapseln der Wand mit einer Diffusionsbarriereschicht reduziert oder vermieden werden. Dies begründet sich in der hemmenden Wirkung des Iridiums hinsichtlich der Diffusion von Wasserstoff.

Bildet die schmelzzugewandte Seite der Diffusionsbarriereschicht die Schmelzkontaktfläche der Wand, so wird die Bildung von Blasen durch die hemmende Wirkung hinsichtlich der Wasserstoffdiffusion und zudem die Bildung von Schlieren durch seine metallische Oberfläche an der Schmelzkontaktfläche verhindert.

Die Iridium umfassende Diffusionsbarriereschicht übernimmt die Funktion zumindest einer Blasenreduzierungsschicht oder sogar einer Blasenverhinderungsschicht oder ist eine Blasenreduzierungsschicht oder Blasenverhinderungsschicht. Bildet die schmelzzugewandte Seite der Diffusionsbarriereschicht auch die Schmelzkontaktfläche der Wand so übernimmt die Diffusionsbarriereschicht zusätzlich die Funktion zumindest einer Schlierenreduzierungsschicht oder sogar einer Schlierenverhinderungsschicht oder ist zumindest eine Schlierenreduzierungsschicht oder Schlierenverhinderungsschicht.

Neben der Qualität hinsichtlich Blasen, Schlieren- und Platinfreiheit, zeichnen sich die mit dem erfindungsgemäßen Verfahren oder mittels der erfindungsgemäßen Vorrichtung hergestellten Gläser dadurch aus, dass das Glas einen Wasseranteil oder einen Gehalt an Wasser aufweist, der im wesentlichen etwa dem Wassergehalt entspricht, welchen die Glasschmelze nach der Läuterung aufweist und die Schmelze in ein geschlossenes System, d.h. ein System, welches mit der Umgebung nicht in Kontakt steht, eintritt.

Die vorliegende Erfindung wird nachfolgend anhand von Ausführungsbeispielen im einzelnen beschrieben, wobei die Merkmale der unterschiedlichen Ausführungsbeispiele miteinander kombinierbar sind. Hierzu wird auf die beigefügten Zeichnungen Bezug genommen. Dazu beziehen sich in den einzelnen Zeichnungen die gleichen Bezugszeichen auf die gleichen Teile.

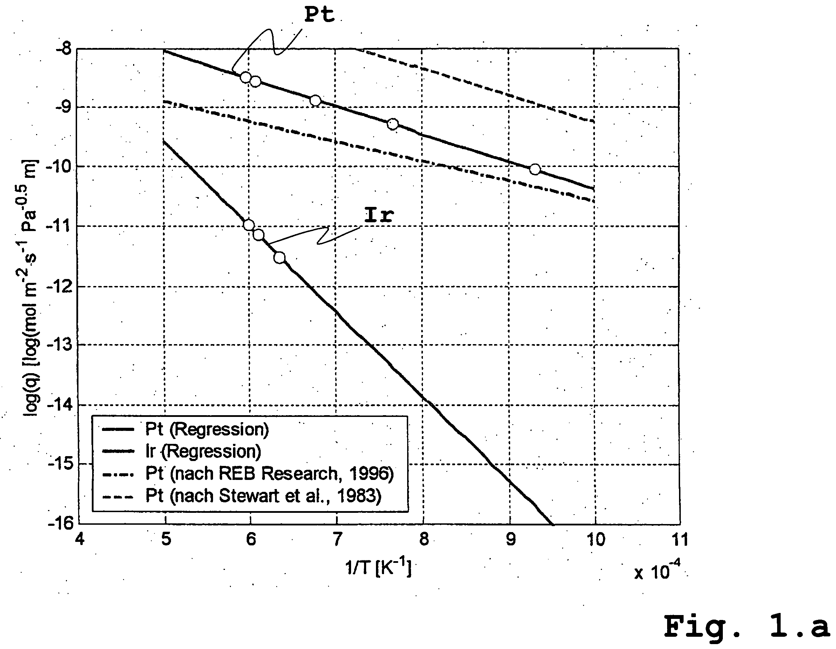

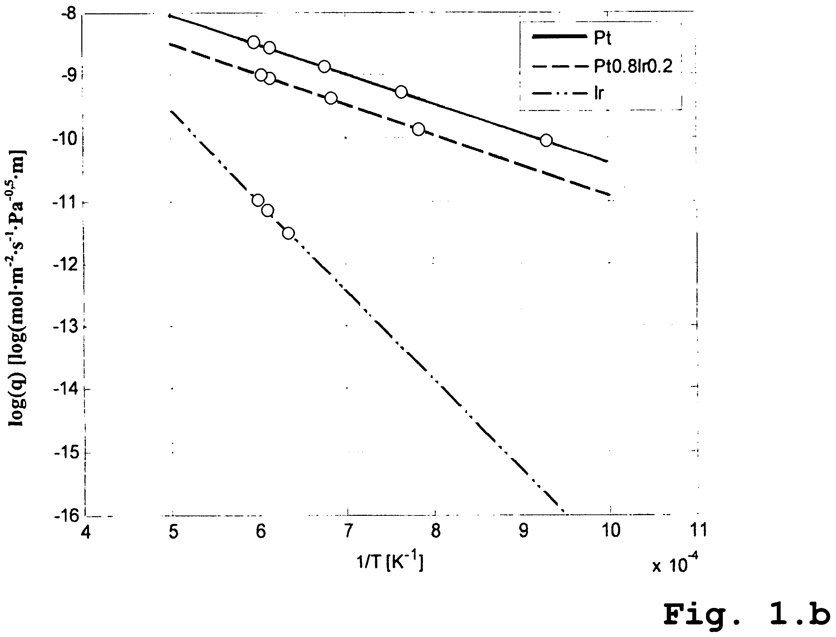

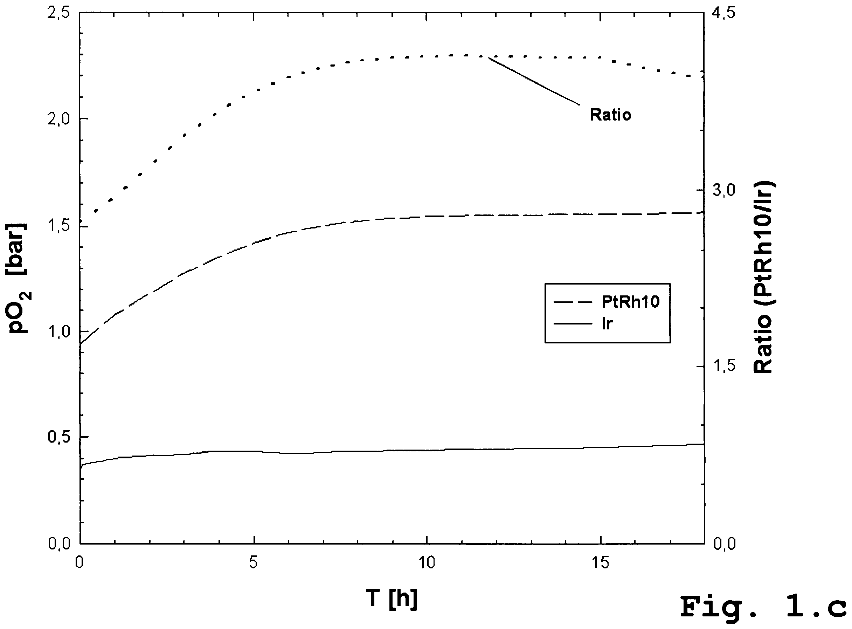

Fig. 1.a zeigt das Ergebnis einer Untersuchung der Wasserstoff-Permeabilität als Funktion der Temperatur.
Fig. 1.b zeigt ein weiteres Ergebnis einer Untersuchung der Wasserstoff-Permeabilität als Funktion der Temperatur.
Fig. 1.c zeigt beispielhaft das Ergebnis einer Sauerstoff-Partialdruck-Messung als Funktion der Zeit.
Fig. 2 zeigt beispielhaft eine schematische Darstellung der einzelnen Prozessschritte oder Prozessvorrichtungen in der Glasherstellung (Schmelztiegel, Läutertiegel, Homogenisierungsvorrichtung, Konditionierungswanne, Rinnen)
Fig. 3 zeigt eine schematische Detailansicht des Ausschnitts A1 aus Figur 2 mit einer beispielhaften Ausführungsform als einschichtiges System.
Fig. 4 zeigt eine schematische Detailansicht des Ausschnitts A1 aus Figur 2 mit einer beispielhaften Ausführungsform als zweischichtiges System.
Fig. 5 zeigt eine schematische Detailansicht des Ausschnitts A1 aus Figur 2 mit einer weiteren beispielhaften Ausführungsform als zweischichtiges System.
Fig. 6 zeigt eine schematische Detailansicht des Ausschnitts A1 aus Figur 2 mit einer beispielhaften Ausführungsform als abschnittsweise zweischichtiges System.

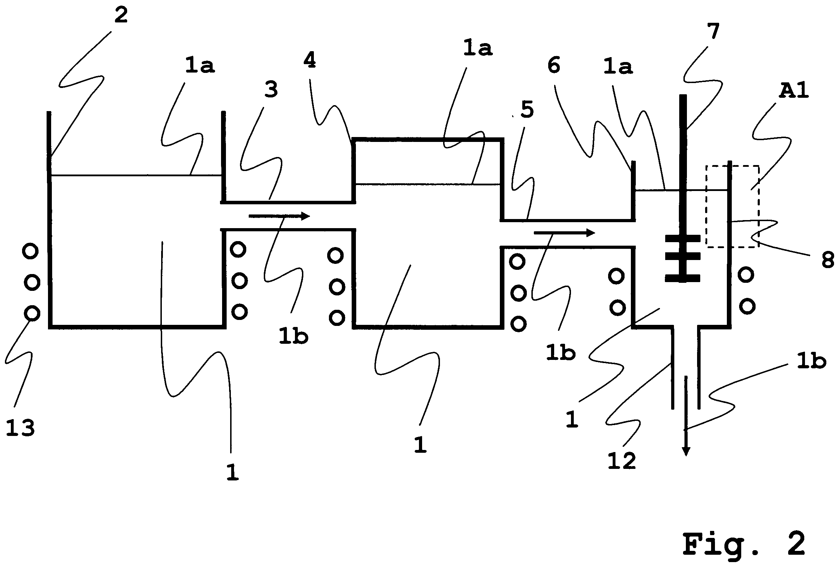

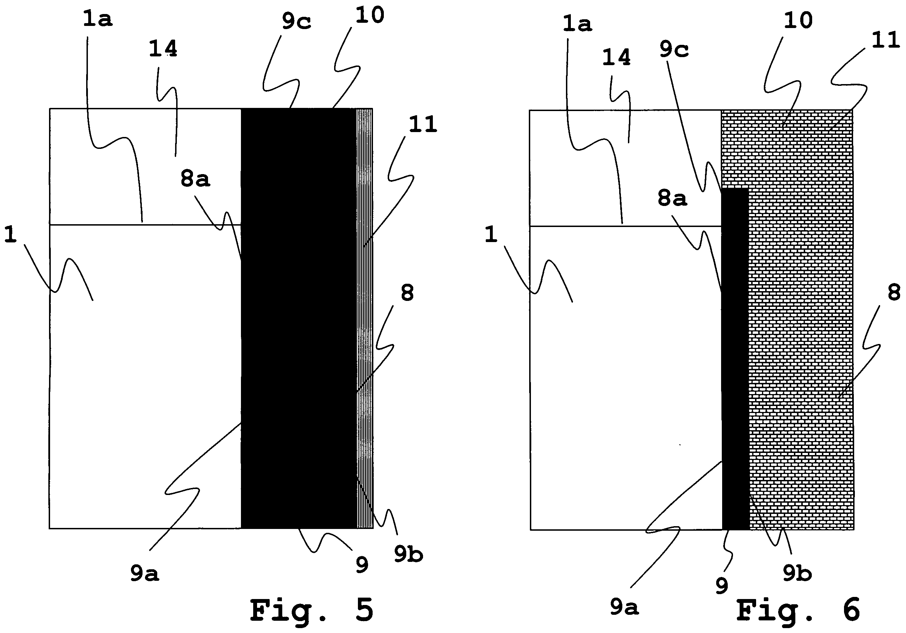

Fig. 6 zeigt eine schematische Detailansicht des Ausschnitts A1 aus Figur 2 mit einer weiteren beispielhaften Ausführungsform als abschnittsweise zweischichtiges System.

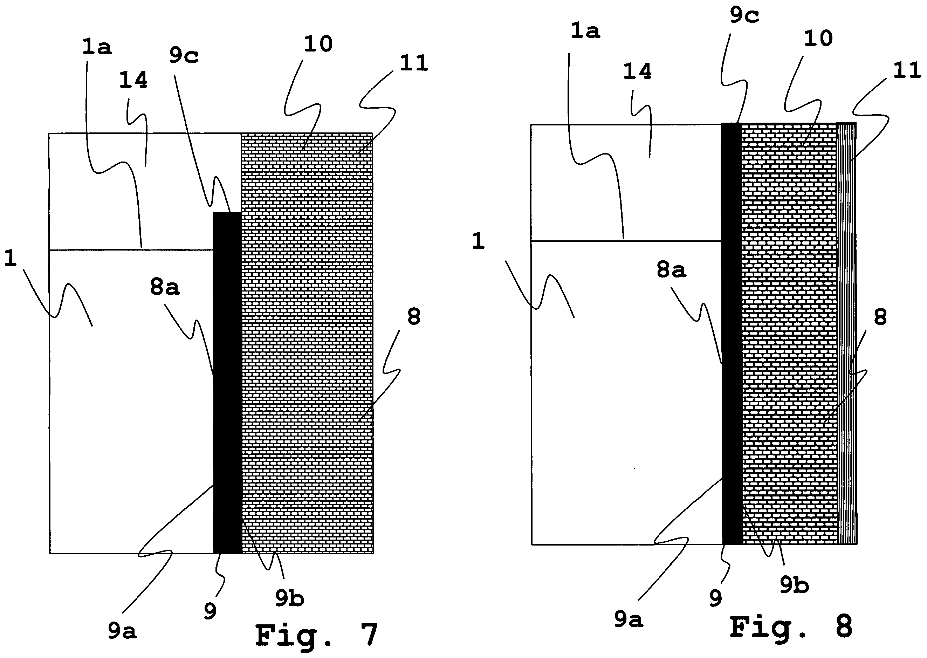

Fig. 8 zeigt eine schematische Detailansicht des Ausschnitts A1 aus Figur 2 mit einer beispielhaften Ausführungsform als dreischichtiges System.

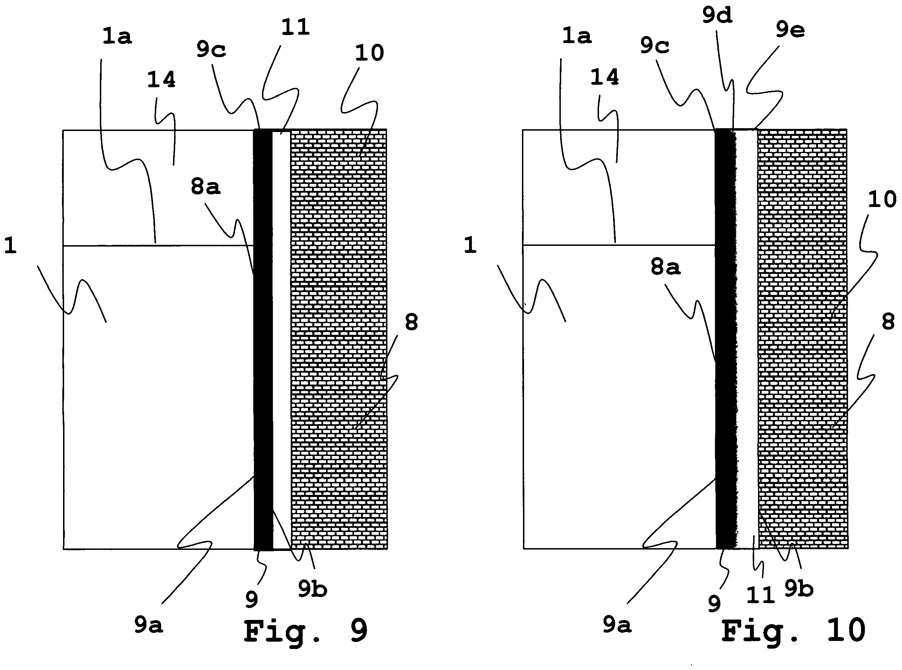

Fig. 9 zeigt eine schematische Detailansicht des Ausschnitts A1 aus Figur 2 mit einer weiteren beispielhaften Ausführungsform als dreischichtiges System.
Fig. 10 zeigt eine schematische Detailansicht des Ausschnitts A1 aus Figur 2 mit einer weiteren beispielhaften Ausführungsform als zweischichtiges System aufweisend einer an Ir-Gehalt graduell abnehmenden Schicht.

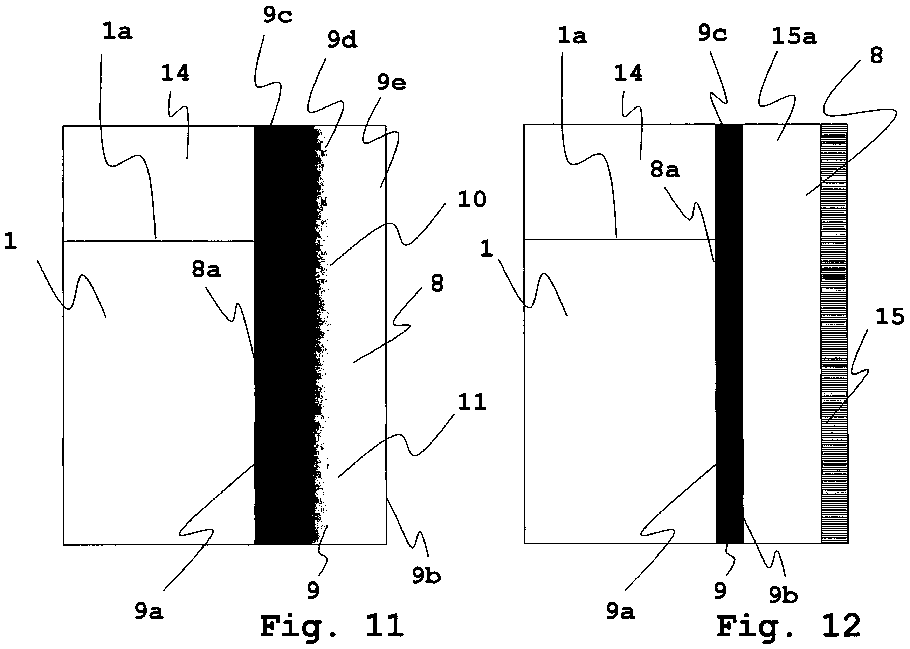

Fig. 11 zeigt eine schematische Detailansicht des Ausschnitts A1 aus Figur 2 mit einer weiteren beispielhaften Ausführungsform einer an Ir-Gehalt graduell abnehmenden Schicht.
Fig. 12 zeigt eine schematische Detailansicht des Ausschnitts A1 aus Figur 2 mit einer weiteren beispielhaften Ausführungsform ausgebildet mit einer Verkapselung.

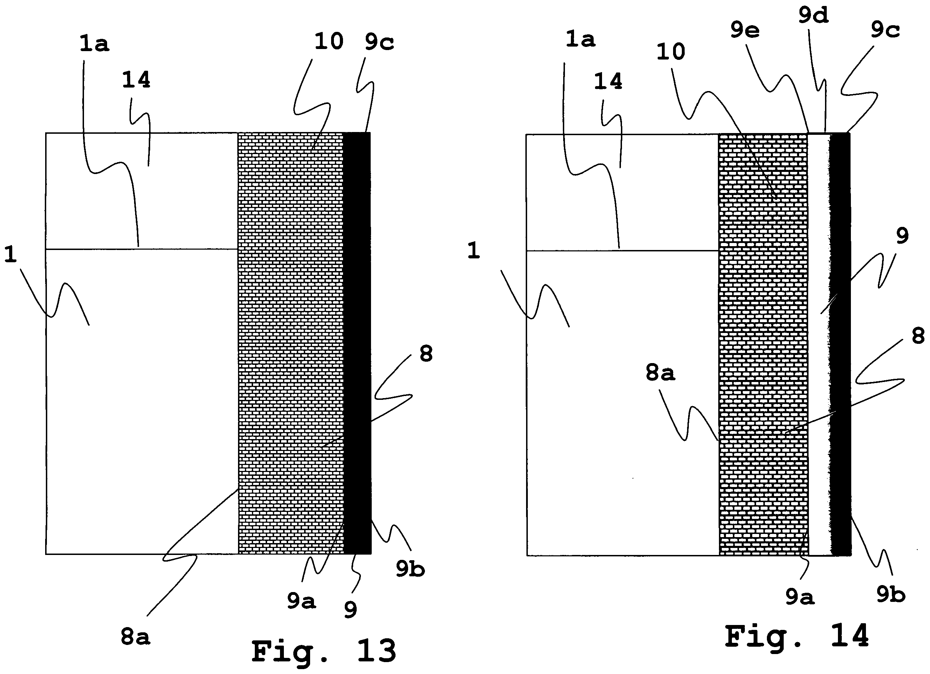

Fig. 13 zeigt eine schematische Detailansicht des Ausschnitts A1 aus Figur 2 eines beispielhaften zweischichtigen System, umfassend eine Trägerschicht und eine außenliegend angeordnete Iridium umfassende Diffusionsbarriereschicht.
Fig. 14 zeigt eine schematische Detailansicht des Ausschnitts A1 aus Figur 2 mit einer weiteren beispielhaften Ausführungsform als zweischichtiges System aufweisend einer an Ir-Gehalt graduell zunehmenden Schicht.

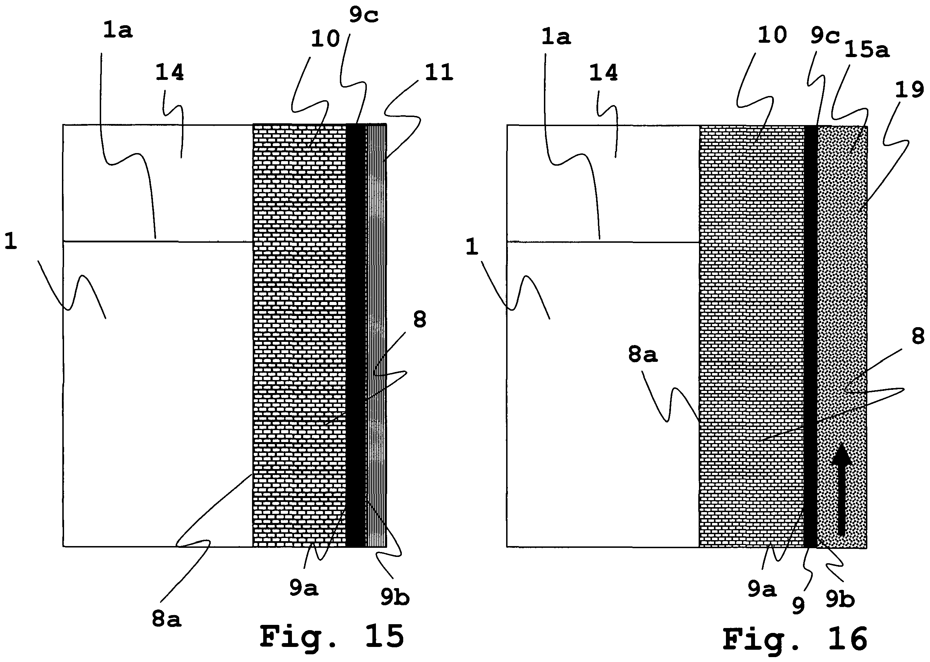

Fig. 15 zeigt ein beispielhaftes dreischichtiges System, welches dem Schichtsystem in Fig. 13 mit einer zusätzlich außenliegend angeordneten Schutzschicht entspricht.
Fig. 16 zeigt das Schichtsystem aus Fig. 13 mit einem zusätzlich außenliegend angeordneten porösen Material.

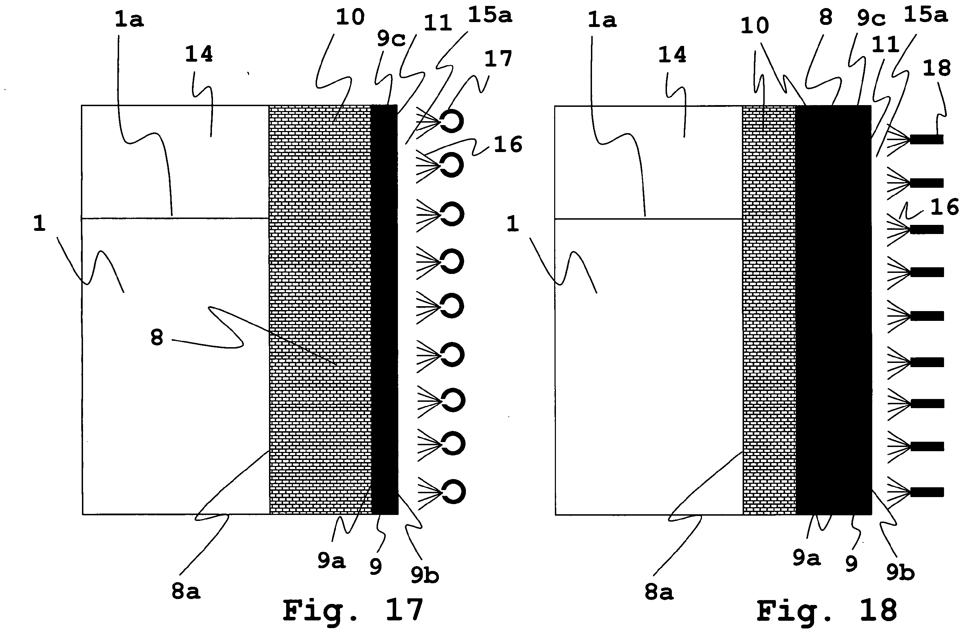

Fig. 17 zeigt das Schichtsystem aus Fig. 13 mit einem zusätzlich angeordneten fluiden Vorhang.
Fig. 18 zeigt ein Schichtsystem in einer weiteren Ausführungsform mit einem zusätzlich angeordneten fluiden Vorhang in einer weiteren Ausführungsform.

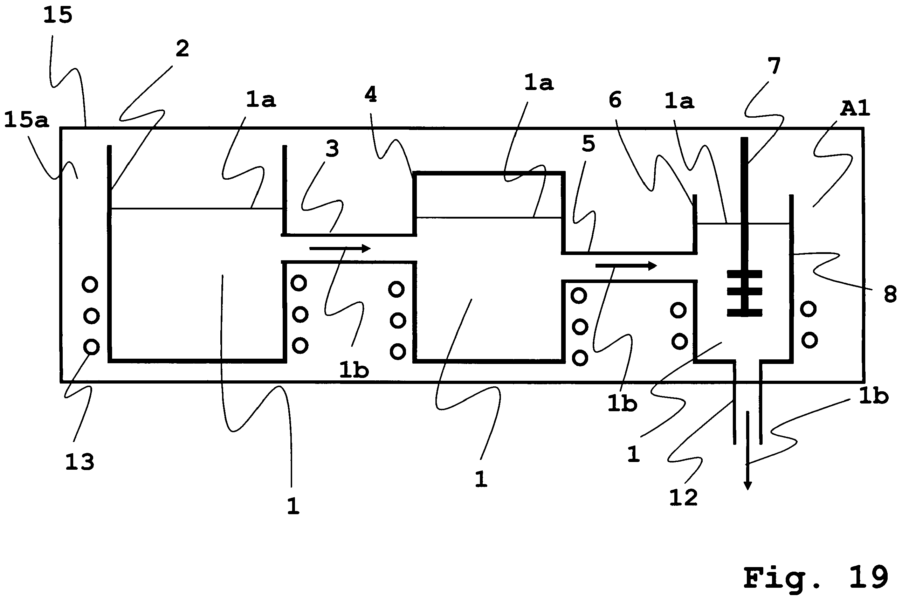

Fig. 19 zeigt die Vorrichtung aus Figur 2 mit einer schematischen Darstellung einer Verkapselung und einer definierten Atmosphäre.

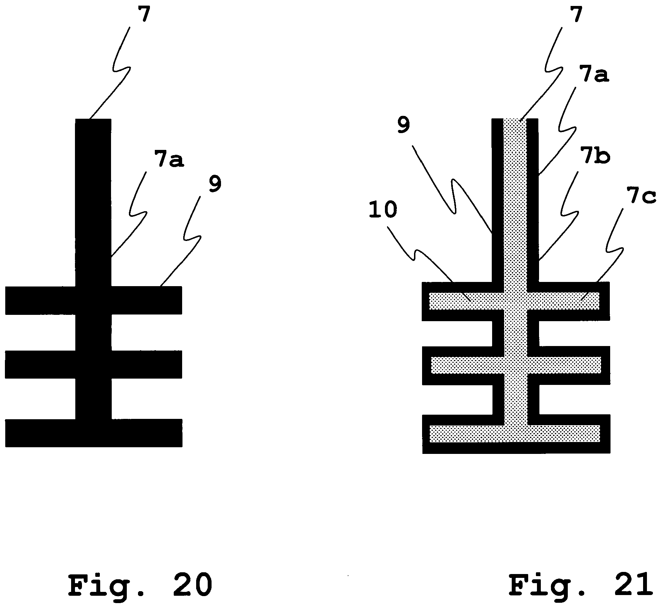

Fig. 20 zeigt schematisch die Rührvorrichtung aus Fig. 2 in einer vergrößerten Darstellung.
Fig. 21 zeigt schematisch die Rührvorrichtung aus Fig. 2 in einer vergrößerten Darstellung mit einer weiteren beispielhaften Ausführungsform als zweischichtiges System.

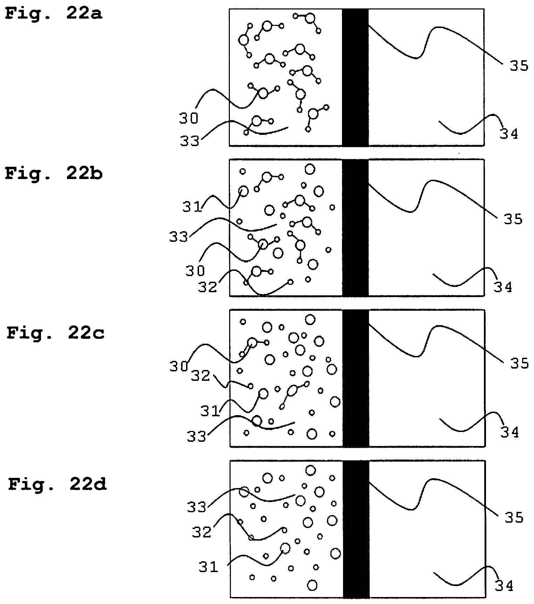

Figur 22 zeigt schematisch die diffusionshemmende Wirkung einer Iridium umfassenden Wand.

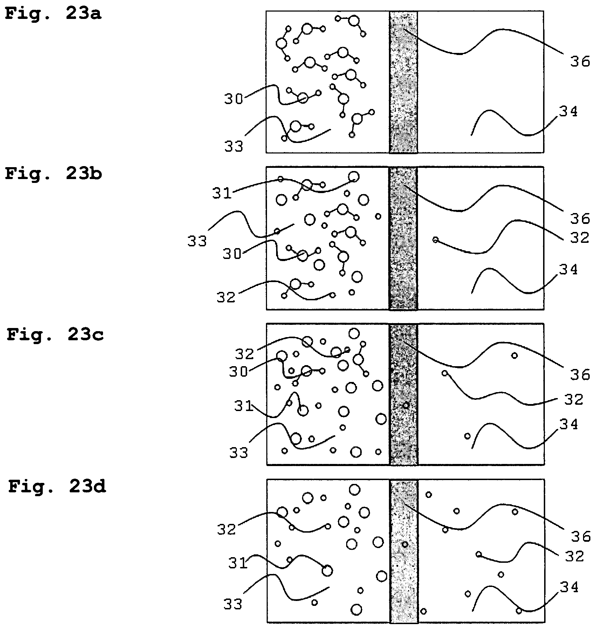

Figur 23 zeigt schematisch die Diffusion von Wasserstoff durch eine Platinwandung.

Fig. 1.a zeigt das Ergebnis einer Untersuchung der stationären Permeation von Wasserstoff durch rohrförmige Proben aus Platin und Iridium in einem Temperaturbereich von etwa 800°C bis etwa 1400°C. Die rohrfömigen Proben sind in einem Rohrofen angeordnet, dessen maximal zugängliche Temperatur um 1400°C liegt. Die Durchströmung der Apparatur erfolgt dabei nach dem Gegenstromprinzip. Dargestellt ist die Wasserstoffpermeabilität der beiden Proben als Funktion der Temperatur. Die beiden zusätzlich eingetragenen Funktionen ohne Symbole markieren den Verlauf der Wasserstoffpermeabilität von Platin nach in Literatur vorhandenen Diagrammen.

Die experimentell ermittelten Werte sind jeweils als Symbole dargestellt und wurden zu kleinen als auch zu großen Temperaturen hin extrapoliert. Jedoch weist Iridium bei Temperaturen von unterhalb 1300°C eine Wasserstoffpermeabilität auf, welche mit dem zur Verfügung stehenden experimentellen Aufbau kaum meßbar ist.

Es ist jedoch deutlich zu erkennen, dass das Iridiumrohr, als Beispiel für eine Vorrichtung mit Wänden aus Iridium, oder Iridium eine wesentlich geringere Permeabilität als das Platinrohr oder Platin zeigt. Ausgehend von dem Fit der experimentellen Daten weist Iridium oder das Iridiumrohr in einem Temperaturbereich von etwa 1100°C bis etwa 1700°C eine Wasserstoffpermeabilität auf, welche gegenüber Platin oder dem Platinrohr um etwa 3,7 Größenordnungen bis etwa 1,6 Größenordnungen erniedrigt ist. In einem Temperaturbereich von etwa 1300°C bis etwa 1500°C weist Iridium oder das Iridiumrohr eine Wasserstoffpermeabilität auf, welche gegenüber Platin oder dem Platinrohr um etwa 2,8 Größenordnungen bis etwa 2,2 Größenordnungen erniedrigt ist. Bei der maximal zugänglichen Untersuchungstemperatur um 1400°C weist Iridium oder das Iridiumrohr eine Wasserstoffpermeabilität auf, welche gegenüber Platin oder dem Platinrohr um etwa 2,5 Größenordnungen erniedrigt ist.

Figur 1.b zeigt ein weiteres Ergebnis einer Untersuchung der Wasserstoff-Permeabilität als Funktion der Temperatur. Die Untersuchung wurde unter den gleichen Bedingungen ermittelt wie die in Figur 1.a dargestellten Ergebnisse. Dazu wurde hier eine rohrförmige Probe verwendet, welche zu 80 % aus Platin und zu 20 % aus Iridium besteht. Dargestellt ist die Wasserstoffpermeabilität der Probe als Funktion der Temperatur. Dabei entsprechen die für Iridium und Platin dargestellten Werte den Werten, welche bereits in Fig. 1.a gezeigt sind. Auch eine Legierung, welche nur einen Anteil an Iridium von 20 % aufweist, zeigt im gemessenen Temperaturbereich von etwa 1000°C bis etwa 1400°C eine Wasserstoffpermeabilität, welche deutlich geringer als die von Platin ist. Sie entspricht etwa einer Wasserstoffpermeabilität von etwa 31 % bis etwa 35 % der Wasserstoffpermeabilität des Platins. Unter Interpolation und Extrapolation der Daten liegt der reduzierte Wert der Wasserstoffpermeabilität des Pt0,8Ir0,2 von etwa 31 % bis etwa 35 % gegenüber der Wasserstoffpermeabilität des Platins auch in einem Temperaturbereich von etwa 1100°C bis etwa 1700°C oder etwa 1300°C bis etwa 1500°C vor.

Unter Berücksichtigung der vorstehend gezeigten Daten wird deutlich, dass eine weitere Zunahme des Anteils an Iridium zu einer weiter reduzierten Wasserstoffpermeabilität führt. Ausgehend von einem Anteil an Iridium von etwa 20 % bis zu einem Anteil von etwa 100 % liegt die Wasserstoffpermeabilität der entsprechenden Iridium umfassenden Legierung zwischen vorstehend genannten Werten.

Die Daten belegen erstmalig die Sperrwirkung oder diffusionsreduzierende Wirkung des Iridiums für Wasserstoff gegenüber Platin. Iridium stellt somit eine Diffusionsbarriere für den Wasserstoff dar. Dieses Ergebnis wird bestätigt durch eine Untersuchung des in einer Glasschmelze vorhandenen Sauerstoffpartialdrucks.

Fig. 1.b zeigt dazu beispielhaft das Messergebnis einer Sauerstoff-Partialdruck-Messung pO₂ als Funktion der Zeit T. Es wurden ein PtRh10-Rohr und ein Ir-Rohr in eine Glasschmelze mit einer Temperatur von etwa 1430°C getaucht Die Glasschmelze umfasste dabei ein Alumosilikatglas. Der Wert des Sauerstoff-Partialdrucks pO₂ ist durch die linke Ordinate gegeben, während die rechte Ordinate Auskunft über das Verhältnis der Sauerstoffpartialdrücke angibt. Es ist deutlich zu erkennen, dass der Sauerstoff-Partialdruck pO₂ in dem Schmelzbereich des Ir-Rohrs gegenüber dem PtRh10-Rohr reduziert ist. Der Sauerstoffpartialdruck in der Schmelze ist mittels einer Lambdasonde bestimmt worden.

Dabei ist der Sauerstoffpartialdruck beim PtRh10-Rohr gegenüber dem Ir-Rohr anfänglich um einen Faktor von etwa 2,7 größer. Nach etwa 6 bis 8 Stunden beträgt der Faktor etwa 4,1. Bei Iridium oder dem Iridiumrohr ist der Sauerstoffpartialdruck in der Schmelze gegenüber Platin, hier der Platinlegierung PtRh10, oder dem PtRh10-Rohr um einen Faktor von etwa 2,7 bis etwa 4,1 reduziert. Der Sauerstoffpartialdruck ist ein indirekter Indikator für die Diffusion des Wasserstoffs durch die Rohrwand aus Platin, wobei noch weitere Einflüsse, wie beispielsweise die Menge und die Löslichkeit des Wasserstoffs in der Schmelze oder Transportphänomene in der Schmelze zu berücksichtigen sind. Zudem liegt eine Platinlegierung vor. Dies legt die Vermutung nahe, dass Permeabilität durch den Gehalt an anderen Metallen, hier Rhodium, beeinflusst wird. Die Daten bestätigen die Sperrwirkung oder diffusionsreduzierende Wirkung des Iridiums für Wasserstoff gegenüber Platin in einer Glasschmelze.

Die für die Blasenbildung notwendige Triebkraft beruht auf einer temporären Übersättigung der Schmelze mit Gasen. Ein Parameter ist der entsprechende Sauerstoff- oder Gäspartialdruck. Der Wert des Sauerstoff-Partialdrucks von pO₂ ≈ 1 bar stellt für die untersuchte Glasschmelze einen Grenzbereich dar, ab bzw. in welchem eine Neu-Blasenbildung, im wesentlichen durch den im Glas gelösten Sauerstoff, einsetzt. Für die in dem vorstehenden Teil der Beschreibung genannten Gläser erweist sich dieser Grenzwert von pO₂ ≈ 1 bar als relevant. Der kritische Wert ist abhängig von den vorliegenden Umgebungsbedingungen. Der Wert von pO₂ ≈ 1 bar wurde Standardatmosphäre bzw. unter Standardbedingungen von etwa 1 atm ermittelt.

Bei dem Platinrohr liegt der Anfangswert bereits bei einem Wert pO₂ von etwa 0,95 bar und somit in dem kritischen Grenzbereich von etwa pO₂ ≈ 1 bar. Die Blasenbildung oder die Neu-Blasenbildung setzt sofort ein. ein Nach kurzer Zeit, etwa 20 bis 30 Minuten, übersteigt der Sauerstoffpartialdruck sogar den Wert von 1 bar. Dagegen liegt der Wert des Sauerstoff-Partialdrucks bei dem Iridiumrohr in dem dargestellten Zeitintervall bis zu T ≈ 18 h bei einem mittleren Wert von pO₂ ≈ 0,4 bar oder in einem Intervall von pO₂ ≈ 0,34 bar bis zu pO₂ ≈ 0,47 bar. Der Wert des Sauerstoff-Partialdruck liegt bei dem Iridiumrohr deutlich unter 1 bar und die Bildung von Blasen kann folglich wirksam über einen Zeitraum von bis zu 18 Stunden zumindest reduziert oder unterdrückt werden.

Das untersuchte System ist statisch. Entsprechend ist die Verweilzeit für das vorliegende Glassystem oder die untersuchte Glassschmelze und die vorstehend genannten Glaser in dem Temperaturbereich von 1430°C in einem fließenden oder strömenden System, wie die Glasschmelze in einer Transportvorrichtung und/oder Homogenisierungsvorrichtung und/oder Konditionierungsvorrichtung, nicht kritisch. Die Verweilzeit ist jedoch abhängig von dem Durchsatz an Schmelze, der Temperatur in der Schmelze, der Glassorte und den Abmessungen und der Geometrie der Vorrichtungen.

Die Verweilzeit ist die individuelle Aufenthaltsdauer der Glasschmelze in der Transportvorrichtung und/oder Homogenisierungsvorrichtung und/oder Konditionierungsvorrichtung. Die mittlere Verweilzeit ist der Quotient aus dem Vorrichtungsvolumen und dem Volumenstrom der durch die Vorrichtung strömendem Glasschmelze. Die Verweilzeit ist für den Umsatz und die Selektivität chemicher Reaktionen bedeutend. Eine im Hinblick auf Zeitaufwand optimierte Durchführung des Verfahrens wird des Weiteren ermöglicht, indem die Verweilzeitverteilung und/oder die mittlere Verweilzeit der Schmelze im Gefäß geregelt und/oder gesteuert und/oder eingestellt wird.In weiteren Vergleichsmessungen an Bauteilen aus Iridium und Platin konnten die Erfinder erstmalig zeigen, dass die Sperrwirkung gegenüber der Wasserstoffdiffusion des Iridiums zu einer Verhinderung der Blasenbildung an der Grenzfläche zwischen Schmelze und Glas zur Folge hat. Dieser Effekt ließ sich bei der Verwendung von Platinrohren nicht feststellen. Hier waren an der Grenzfläche zwischen Metall und Schmelze Blasen zu beobachten, woraus eindeutig hervorgeht, dass Platin im Gegensatz zu Iridium zumindest durchlässiger für Wasserstoff ist.

Eine Iridium umfassende Oberfläche oder eine Iridium umfassende Schmelzkontaktschicht 9 übernimmt dabei die Funktion einer Diffusionsbarriereschicht für Wasserstoff und ist somit eine Blasenreduzierungsschicht oder Blasenverhinderungsschicht. Dies umfasst auch die Verwendung von Iridium in einer Schmelzkontaktfläche 8a, vorzugsweise im Bereich einer mit der Schmelze 1 in Kontakt stehenden Wand 8, zum Minimieren oder unter Umständen sogar zum Verhindern der Bildung von Blasen in dem Wand-SchmelzBereich oder in der Wechselwirkung zwischen der Wand 8 und der Schmelze 1.

Fig. 2 zeigt beispielhaft eine schematische Darstellung der einzelnen Prozessschritte in der Glasherstellung oder einer Anlage zum Schmelzen, Transportieren, Läutern, Homogenisieren und Konditionieren von Glas oder einer Schmelze oder Glasschmelze 1.

Unter Homogenisierung wird die Auflösung und gleichmäßige Verteilung aller Bestandteile sowie die Beseitigung von Schlieren verstanden. Unter der Konditionierung einer Schmelze oder Glasschmelze wird dabei verstanden, die Temperatur der Schmelze schnell und möglichst exakt einzustellen. Dies ist beispielsweise in Rinnensystemen von Glasschmelzanlagen der Fall, wenn Aufschmelz- und Läuterprozesse abgeschlossen sind und das Glas auf eine gewünschte Formgebungstemperatur gebracht werden muss.

Der erste Prozessschritt in der Glasherstellung stellt das Einschmelzen der Ausgangssubstanz, des sogenannten Gemenges, in einem Schmelztiegel 2 dar. Während das Gemenge bereits zähflüssig geworden ist, beginnt eine erste langsame Homogenisierung der Schmelze 1. Beispielhaft ist ein offener Schmelztiegel 2 mit einer offenen Schmelzoberfläche 1a dargestellt.

Um eine Höchstmaß an Homogenität und Blasenfreiheit zu erzielen, bedarf es gründlicher Durchmischung und Entgasung des Glasschmelze 1. Daher schließt sich im allgemeinen dem Einschmelzen nachfolgend die Läuterung der Glasschmelze 1 an. Entsprechend wird die Schmelze 1 oder Glasschmelze 1 über eine erste Rinne 3 entlang dem Schmelzfluss oder der Strömungsrichtung 1b der Schmelze 1 einer Vorrichtung zum Läutern, hier einer Läuterwanne 4 mit Abdeckung, zugeführt. Wesentliches Ziel der Läuterung ist die physikalisch und chemisch in der Schmelze gebundenen Gase aus der Schmelze 1 zu entfernen. In der Läuterwanne 4 kann ebenso eine weitere Homogenisierung der Glasschmelze 1 erfolgen.

Nachdem durch die Läuterung die Blasen in der Schmelze entfernt wurden, soll nun die Neubildung von Blasen in der Schmelze zumindest reduziert oder verhindert werden. Über eine zweite Rinne 5 wird die Schmelze 1 oder Glasschmelze 1 entlang dem Schmelzfluß 1b der eigentlichen Homogenisierungsvorrichtung 6 zugeführt. Dies umfasst vorliegend eine in einer Wanne angeordnete Rührvorrichtung 7, welche dem Homogenisieren, Konditionieren der Glasschmelze 1 und dem Entfernen von Schlieren aus der Glasschmelze 1 dient.

Über eine Konditionierungsvorrichtung 12, beispielhaft ausgebildet als eine weitere Rinne, wird die Schmelze 1 entlang dem Schmelzfluß 1b beispielsweise einer Vorrichtung zur Formgebung, hier nicht dargestellt, zugeführt und in der Konditionierungsvorrichtung 12 auf die notwendige Formgebungstemperatur gebracht. Entsprechend kann auch der ersten Rinne 3, der zweiten Rinne 5 als auch der Homogenisierungsvorrichtung 6 die Funktion einer Konditionierungsvorrichtung 12 zukommen.

Das Beheizen der Anlage zum Schmelzen, Transportieren, Läutern, Homogenisieren und Konditionieren von Glas oder einer Schmelze 1 oder Glasschmelze 1 erfolgt im vorliegenden Fall induktiv, mittels eines Spulensystems 13, welches jeweils um die entsprechende Vorrichtung 2,3,4,5,6,12, teilweise nicht dargestellt, angeordnet ist. Die Beheizung kann aber auch konduktiv, konventionell oder mittels einer Kombination der genannten Verfahren erfolgen.

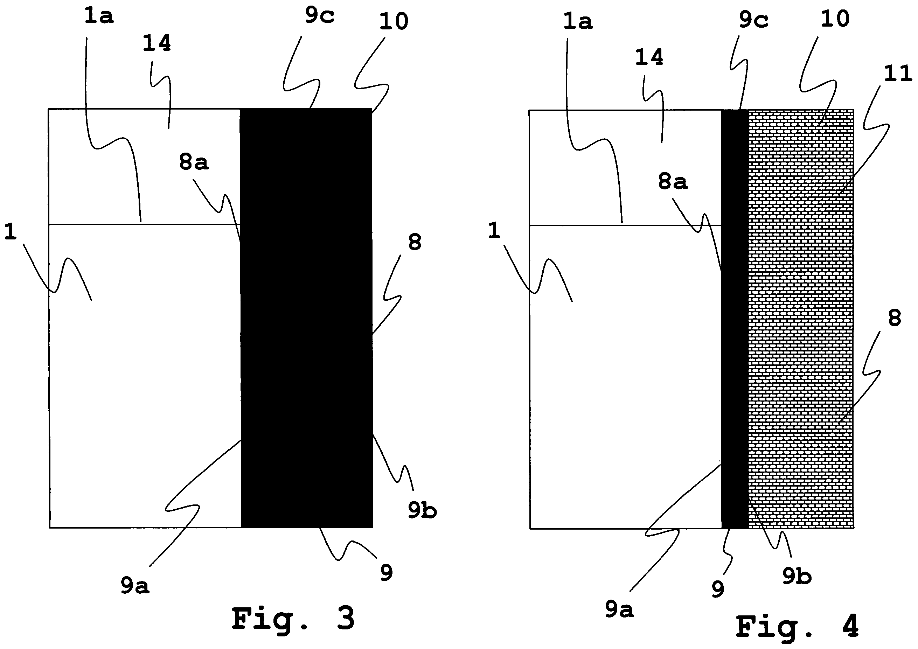

Die nachfolgenden Figuren 3 bis 11 zeigen jeweils eine schematische Detailansicht des Ausschnitts A1 aus Figur 2 mit jeweils einer beispielhaften Ausführungsform der vorliegenden Erfindung. Ausschnitt A1 ist zwar als ein Ausschnitt einer Wand 8 der Homogenisierungsvorrichtung 6 dargestellt, jedoch sind eine Wand 8, ein Boden, eine Abdeckung des Schmelztiegels 2, der ersten Rinne 3, der Läuterwanne 4, der zweiten Rinne 5, des Rührer 7, der Konditionierungsvorrichtung 12 und/oder ein Verbindungselement, hier nicht dargestellt, zwischen den einzelnen Vorrichtungen so aufgebaut oder können entsprechend aufgebaut sein.

Je nach Ausführung kann die Diffusionsbarriereschicht 9 über ihre schmelzzugewandte Seite 9a zumindest abschnittsweise eine Schmelzkontaktfläche 8a aufweisen. Die Schmelzkontaktfläche 8a beschreibt dabei jeweils die Fläche oder Seite, über welche die Diffusionsbarriereschicht 9 mit der Schmelze 1 in Kontakt steht oder in Berührung kommt. Der schmelzzugewandten Seite 9a der Diffusionsbarriereschicht 9 liegt die schmelzabgewandte Seite 9b der Diffusionsbarriereschicht 9 gegenüber.

Erfindungsgemäß umfasst die Diffusionsbarriereschicht 9 als Materialien die Bestandteile Iridium oder eine Iridiumlegierung und stellt folglich einen iridiumhaltigen Wandabschnitt 9c oder Abschnitt der Wand 8 dar. Als besonders vorteilhaft neben reinem Iridium haben sich dabei die Iridiumlegierungen ergeben, welche in den folgenden Dokumenten aufgeführt sind: JP 10259435 A, WO 2004/007782 A1, US 3970450 A1, US 4253872 A1, US 5080862 A1, EP 732416 B1, DE 3301831 A1, US 6071470 A1, US 3918965 A1 und US 6511632 B1.

Die Figuren zeigen jeweils die Wand 8, welche die Begrenzung der Homogenisierungsvorrichtung 6 oder des Behälters der Homogenisierungsvorrichtung 6 bildet, die Glasschmelze 1, die Schmelzoberfläche 1a und einen zwischen der Schmelzoberfläche 1a und der Wand 8 gebildeten Raum 14.

In dem zwischen der Schmelzoberfläche 1a, der Wand 8 und einer hier nicht dargestellten Abdeckung der entsprechenden Vorrichtung gebildeten Raum 14 kann eine definierte Atmosphäre angelegt sein. Um beispielsweise die Oxidation von Iridium- oder Iridiumlegierung-basierten Bauteilen zu vermeiden, kann in dem Raum 14 eine Atmosphäre aus einem Schutzgas, insbesondere Stickstoff, Argon, Helium oder Formiergas (95/5 oder 90/10) oder ein Unterdruck erzeugt sein.

Fig. 3 zeigt eine erste beispielhafte Ausführungsform der vorliegenden Erfindung. Die dargestellte Wand 8 ist vorliegend als ein einschichtiges System ausgebildet.

Dieses einschichtige System wird dabei durch die Diffusionsbarriereschicht 9 gebildet. Demzufolge übernimmt die Diffusionsbarriereschicht 9 auch die tragende oder stützende Funktion der Wand 8 oder ist also auch eine Trägerschicht 10 im Sinne der vorliegenden Anmeldung. Mit anderen Worten, die Wand besteht aus Iridium oder einer Iridiumlegierung mit den genannten Eigenschaften. Eine thermisch, chemisch und mechanisch stabile Wand 8 aus Iridium weist dabei eine Dicke von etwa 0,3 mm bis etwa 1 mm auf. Für eine Wand mit den genannten Bestandteilen einer Iridium-Legierung hat sich ebenso eine Dicke von etwa 0,3 mm bis etwa 1 mm als vorteilhaft erwiesen hat.

Fig. 4 zeigt eine beispielhafte Ausführungsform der Wand 8 als zweischichtiges System oder als 2-Schicht-System. Dabei umfasst die Wand 8 oder ein Abschnitt der Wand 8 die Diffusionsbarriereschicht 9 und eine Trägerschicht 10, welcher auf der schmelzabgewandten Seite 9b der Diffusionsbarriereschicht 9 angeordnet ist. Oder aber die Diffusionsbarriereschicht 9 ist auf der Trägerschicht 10 angeordnet. Der Trägerschicht 10 kommt sowohl eine Stütz- oder Trägerfunktion als auch eine Schutzfunktion zu. Dies umfasst zum einen den Vorteil, dass die Iridium umfassende Diffusionsbarriereschicht 9, welche oberhalb einer Temperatur von etwa 1000°C nicht oxidationsbeständig gegenüber dem Sauerstoff der umgebenden Luft ist, durch die Trägerschicht 10 vor Oxidation geschützt ist. Zum anderen kann die Diffusionsbarriereschicht 9 mittels eines der in der in der Beschreibung offenbarten Verfahren (PVD, CVD, thermisches Spritzen) derart angeordnet oder abgeschieden werden, dass die Dicke minimal, aber noch ausreichend thermisch, chemisch und mechanisch stabil und ausreichend diffusionshemmend für den in der Schmelze vorhandenen Wasserstoff ist. Dies reduziert Materialkosten hinsichtlich der Menge des aufzuwendenden Iridium oder der Iridiumlegierung. Als ausreichend stabil hat sich dabei eine Dicke der Diffusionsbarriereschicht 9 von etwa 50 µm bis etwa 500 µm erwiesen. Auf der anderen Seite sind an das Material der Trägerschicht 10 keine Anforderungen hinsichtlich einer hohen chemischen Beständigkeit gestellt, da die Diffusionsbarriereschicht 9 für die Trägerschicht 10 eine Schutzfunktion übernimmt. Lediglich hinsichtlich Temperaturstabilität, es sind dabei vergleichbare Anforderungen wie an die Diffusionsbarriereschicht 9 zu stellen, als auch hinsichtlich der diffusionshemmenden oder sogar -sperrenden Wirkung gegenüber Sauerstoff sind gehobene Ansprüche zu stellen. Die Temperaturstabilität der Trägerschicht 10 kann sich aber auch an der notwendigen Verarbeitungstemperatur der Schmelze 1 orientieren. Demzufolge übernimmt die Trägerschicht 10 auch eine schützende Funktion für die Diffusionsbarriereschicht 9 der Wand 8 oder ist also auch eine Schutzschicht 11 im Sinne der vorliegenden Anmeldung. Ein bevorzugtes Material für die Trägerschicht 10 ist beispielsweise ein Feuerfeststein oder ein refraktäres Metall wie beispielsweise Molybdän, Wolfram, Edelstahl, Ni-Basislegierung, Co-Basislegierung, Pt- und/oder Pt-Legierung. Hinsichtlich der Dicke der Trägerschicht 10 hat sich, abhängig vom verwendeten Material, eine Wert von 0,1 mm bis etwa 1 mm erwiesen.

Figur 5 zeigt eine weitere beispielhafte Ausführungsform der vorliegenden Erfindung als zweischichtiges System. Entsprechend der Diffusionsbarriereschicht 9 aus Figur 3 übernimmt die vorliegende Diffusionsbarriereschicht 9 auch die tragende oder stützende Funktion der Wand 8 oder ist also auch eine Trägerschicht 10 im Sinne der vorliegenden Anmeldung. Die Dicke der Diffusionsbarriereschicht 9 weist dabei einen Wert von etwa 0,3 mm bis etwa 1 mm auf. Auf der schmelzabgewandten Seite 9b der Diffusionsbarriereschicht 9 ist eine Schutzschicht 11 angeordnet. Diese äußere Beschichtung schützt die Diffusionsbarriereschicht 9 vor Oxidation durch den in der umgebenden Luft enthaltenen Sauerstoff. Die Schutzschicht 11 ist eine Oxidationsschutzschicht. An das Material der Schutzschicht 10 sind keine Anforderungen hinsichtlich einer hohen chemischen Beständigkeit gestellt, da sie nicht in Kontakt mit der Schmelze steht. Lediglich hinsichtlich Temperaturstabilität, es sind dabei vergleichbare Anforderungen wie an die Diffusionsbarriereschicht 9 zu stellen, als auch hinsichtlich der diffusionshemmenden oder sogar -sperrenden Wirkung gegenüber Sauerstoff oder auch aus der Schmelze entweichende Gase wie beispielsweise Wasserstoff, sind gehobene Ansprüche zu stellen. Die Temperaturstabilität der Schutzschicht 11 kann sich aber auch an der notwendigen Verarbeitungstemperatur der Schmelze orientieren. Bevorzugte Materialien für die Schutzschicht 11 umfassen dabei die Materialien Platin, Molybdän, Wolfram, Edelstahl, eine Pt-Legierung, eine Ni-Basislegierung und/oder eine Co-Basislegierung. Abhängig vom Material weist dabei die äußere Beschichtung eine Dicke von 50 µm bis etwa 500 µm auf. Die Schutzschicht 10 kann mittels eines der in der in der Beschreibung offenbarten Verfahren (PVD, CVD, thermisches Spritzen) abgeschieden werden.

Figur 6 zeigt einen möglichen Aufbau der Wand 8 analog zu Figur 4, jedoch mit dem Unterschied, dass die Diffusionsbarriereschicht 9 nur in etwa in dem Abschnitt der Wand 8 oder der durch die Trägerschicht 10 gebildeten Wand 8 eingebracht ist, in welchem die Wand 8 mit der Glasschmelze 1 in Kontakt steht. Somit ist ein Schutz der Diffusionsbarriereschicht 9 in dem Bereich oberhalb der Schmelzoberfläche 1a mittels einer definierten Atmosphäre im Raum 14 nicht notwendig. Zudem können die Materialkosten an Iridium oder Iridiumlegierung aufgrund einer geringeren zu bedeckenden Fläche reduziert werden.

Figur 7 zeigt einen möglichen Aufbau der Wand 8 analog zu Figur 6, jedoch mit dem Unterschied, dass die Diffusionsbarriereschicht 9 nicht in die Wand 8 oder nicht in die durch die Trägerschicht 10 gebildeten Wand 8 eingebracht, sondern aufgebracht ist, welches einen reduzierten Aufwand in der Herstellung darstellt.

Fig. 8 zeigt eine beispielhafte Ausführungsform eines dreischichtigen Systems der vorliegenden Erfindung. Das vorliegende Schichtsystem der Wand 8 stellt eine Kombination der in den Figuren 4 und 5 dargestellten Schichtsysteme dar: die Diffusionsbarriereschicht 9, eine Trägerschicht 10 und eine Schutzschicht 11. Die Diffusionsbarriereschicht 9 ist über ihre schmelzabgewandte Seite 9b auf der Trägerschicht 10 angeordnet oder abgeschieden. Die Schutzschicht 11 ist auf der äußeren Seite der Trägerschicht 10 angeordnet oder abgeschieden. Der Trägerschicht 10 kommt die tragende und/oder stützende Funktion der Wand 8 zu, während der Schutzschicht 11 eine diffusionsreduzierende oder sogar diffusionshemmende Funktion, insbesondere für Sauerstoff, zukommt. Die Eigenschaften hinsichtlich Diffusion und Tragen bzw. Stützen der Wand 8 sind somit getrennt durch zwei Schichten, Schutzschicht 11 und Trägerschicht 10, gewährleistet. Lediglich hinsichtlich Temperaturstabilität sind an die Schutzschicht 11 und die Trägerschicht 10 vergleichbare Anforderungen wie an die Diffusionsbarriereschicht 9 zu stellen. Die Temperaturstabilität der Schutzschicht 11 und der Trägerschicht 10 kann aber auch entsprechend der notwendigen Verarbeitungstemperatur der Schmelze ausgebildet sein.

Figur 9 zeigt eine weitere beispielhafte Ausführungsform eines dreischichtigen Systems oder einen dreischichtigen Aufbau der Wand 8 entsprechend der Figur 8. Vorliegend ist die Schutzschicht 11 zwischen der Diffusionsbarriereschicht 9 und der Trägerschicht 11 angeordnet. Neben den bereits bei der Beschreibung von Figur 8 genannten Eigenschaften der Schutzschicht 11 kann diese darüber hinaus kann auch eine haftvermittelnde Wirkung zwischen der Trägerschicht 10 und der Diffusionsbarriereschicht 9 erzeugen.

Fig. 10 zeigt eine weitere beispielhafte Ausführungsform der Wand 8 als ein zweischichtiges System. Obwohl zweischichtig, ist das zugrunde liegende Prinzip analog dem dreischichtigen System von Figur 9. Jedoch weist das vorliegende Schichtsystem der Wand 8, anstelle zweier diskreter Schichten, Diffusionsbarriereschicht 9 und Schutzschicht 11, nur eine Schicht auf, welche sowohl die Funktion der Diffusionsbarriereschicht 9 als auch der Schutzschicht 11 in sich vereinigt. Sie ist dadurch gekennzeichnet, dass die die schmelzzugewandte Seite 9a der Diffusionsbarriereschicht 9 die Schmelzkontaktfläche 8a der Wand 8 bildet und einen iridiumhaltigen Abschnitt 9c darstellt. Diese weist dadurch eine ausreichende Beständigkeit gegenüber der Schmelze 1 auf und reduziert die Bildung von Blasen und/oder Schlieren. Die schmelzabgewandte Seite 9b der Diffusionsbarriereschicht 9 stellt einen iridiumfreien Abschnitt 9e dar, um den iridiumhaltigen Abschnitt 9c vor Oxidation zu schützen und die Diffusion von Gasen zu reduzieren oder sogar zu unterdrücken. Zwischen dem iridiumfreien Abschnitt 9e und dem iridiumhaltigen Abschnitt 9c befindet sich ein iridiumarmer Abschnitt 9d. Der Gehalt an Iridium nimmt, ausgehend von der Schmelzkontaktfläche 8a der Wand oder der schmelzzugewandten Seite 9a der Diffusionsbarriereschicht 9,in Richtung der schmelzabgewandten Seite 9b, graduell ab. Die Erzeugung einer solchen Schicht ist beispielsweise mittels einer Variation der Parameter einer PVD- oder CVDbasierten Abscheidung möglich.

Fig. 11 zeigt analog zur Figur 10 eine weitere beispielhafte Ausführungsform einer an Iridiumgehalt graduell abnehmenden Schicht. Vorliegend wird die Wand 8 durch die an Iridiumgehalt graduell abnehmende Schicht 9,10,11 gebildet. Entsprechend sind die Funktionen einer Diffusionsbarriereschicht 9, einer Trägerschicht 10 und einer Schutzschicht 11 in einer Schicht realisiert.

Fig. 12 zeigt eine schematische Detailansicht des Ausschnitts A1 aus Figur 2 mit einer weiteren beispielhaften Ausführungsform. Um eine Oxidation der Diffusionsbarriereschicht 9 über ihre schmelzabgewandte Seite 9b zu unterdrücken, kann eine definierte Atmosphäre 15a, entsprechend beschrieben hinsichtlich des Raumes 14, angelegt sein. Das Anlegen oder Erzeugen der definierten Atmosphäre 15a erfolgt mittels Anordnen einer Verkapselung 15, welche beispielsweise aus einem Stahl, Ni-Basislegierung, Co-Basislegierung oder Edelstahl gefertigt sein kann.

In den vorstehend beschriebenen Figuren 3 bis 12 bildet die schmelzzugewandte Seite 9a der Diffusionsbarriereschicht 9 die Schmelzkontaktfläche 8a der Wand 8. In den genannten Figuren ist die Diffusionsbarriereschicht 9 eine Schmelzkontaktschicht. In vorteilhafter Weise kann durch eine solche Iridium umfassende oder aus Iridium bestehende Schmelzkontaktschicht mittels ihrer diffusionshemmenden Wirkung für Wasserstoff die Bildung von Blasen als auch durch ihre metallische Oberfläche der Schmelzkontaktfläche die Bildung von Schlieren zumindest minimiert oder unterdrückt werden.

In den nachfolgend beschriebenen Figuren 13 bis 18 bildet die schmelzzugewandte Seite 9a der Diffusionsbarriereschicht 9 keine Schmelzkontaktfläche 8a der Wand 8. In einer solchen Ausführungsform kommt im wesentlichen nur die diffusionshemmende und somit die blasenverhindernde Wirkung der Diffusionsbarriereschicht 9 zur Geltung. Besteht die jeweils gezeigte Trägerschicht 10 aus einem für Wasserstoff permeablen Material wie beispielsweise Platin oder einer Platinlegierung, so kommt es, durch die Diffusion des Wasserstoffs aus der Schmelze oder Glasschmelze durch die Wand 8 nach außen, zur Blasenbildung im wesentlichen im Wandbereich der Schmelze 1. Durch die Anordnung einer Iridium umfassenden oder aus Iridium bestehenden Diffusionsbarriereschicht 9 auf der Außenseite einer solchen Wand 8 wird ein Verlust des Wasserstoffs aus der Schmelze 1 im wesentlichen verhindert und somit die Bildung oder Neubildung von Blasen in der Schmelze im wesentlichen unterdrückt. Besonders vorteilhaft kann die Diffusionsbarriereschicht 9 auch nachträglich in bereits in Betrieb stehende Systeme integriert werden.

Figur 13 zeigt eine schematische Detailansicht des Ausschnitts A1 aus Figur 2 eines beispielhaften zweischichtigen System, umfassend eine Trägerschicht 10, vorzugsweise aus Platin oder einer Platinlegierung und eine auf der Außenseite der Trägerschicht 10 angeordnete Iridium umfassende oder aus Iridium bestehende Diffusionsbarriereschicht 9.

Figur 14 zeigt eine schematische Detailansicht des Ausschnitts A1 aus Figur 2 mit einer weiteren beispielhaften Ausführungsform als zweischichtiges System, welches eine Trägerschicht 10 aufweist und wobei an seiner Außenseite eine an Ir-Gehalt graduell zunehmende Schicht angeordnet ist.

Um eine Oxidation einer freiliegenden schmelzabgewandten Seite 9b der Diffusionsbarriereschicht 9 zu verhindern, kann diese beispielsweise mit einer Schutzschicht 11 verkapselt sein. Fig. 15 zeigt dazu ein beispielhaftes dreischichtiges System, welches dem Schichtsystem in Figur 13 mit einer zusätzlich außenliegend angeordneten Schutzschicht 11 entspricht. Mögliche Materialien der Schutzschicht 11 sind bereits zu den Figuren 3 bis 12 genannt.

Eine weitere Möglichkeit, die Oxidation von Iridium- oder Iridiumlegierung-basierten Bauteilen oder der freiliegenden schmelzabgewandten Seite 9b der Diffusionsbarriere 9 zu vermeiden, kann durch Anlegen einer definierten Atmosphäre 15a in dem Raum, welcher schmelzabgewandte Seite 9b umgibt, erzeugt werden. Mögliche Ausführungen einer definierten Atmosphäre 15a sind bereits beschrieben, unter anderem sei dazu auch auf Figur 19 verwiesen.

Figur 16 zeigt dazu das Schichtsystem aus Figur 13 mit einem zusätzlich außenliegend angeordneten porösen Material 19, beispielsweise in Form einer Schüttung, in welchem eine definierter Atmosphäre 15a erzeugt wird. Beispielsweise kann ein Fluid mit den entsprechenden Eigenschaften durch das poröse Material 19 entlang der Pfeilrichtung fließen. Somit wird nur lokal oder in einem begrenzt Raum eine definierte Atmosphäre 15a erzeugt und eine Oxidation der schmelzabgewandten Seite 9b der Diffusionsbarriere 9 verhindert.

Eine Schüttung besteht aus Feststoffpartikeln, welche als mechanische Stütze oder eine Art Gerüst bilden. Beispielsweise entsteht die Schüttung durch den Auftrag von Schichten. Sie wird auch Haufwerk genannt. Eine wesentliches Merkmal einer Schüttung ist die Porenstruktur. Die Poren werden durch die gerüstbildende Phase gebildet und begrenzt. Die Ausführungsform einer Schüttung erweist sich als vorteilhaft für die mechanische Festigkeit einer Wand einer Transportvorrichtung und/oder Homogenisierungsvorrichtung und/oder Konditionierungsvorrichtung. Vorteilhafterweise besitzt eine Schüttung eine Speicherwirkung für das Fluid. Die Schüttung kann zudem noch eine Verschalung aufweisen.

Eine weitere Möglichkeit zur Ausbildung einer definierten Atmosphäre 15a ist in Figur 17 dargestellt. Die Wand 8 aus Figur 13 oder eine entsprechende Vorrichtung wird mit einem zusätzlich angeordneten fluiden, vorzugsweise gasförmigen Vorhang 16 verkapselt. Die definierte Atmosphäre 15a wird nur lokal oder in einem begrenzt Raum, d.h. zwischen der schmelzabgewandten Seite 9a der Diffusionsschicht 9 und der Austrittsöffnung eines Rohrssystems 17 mittels des fluiden Vorhangs 16 erzeugt. Das Rohrsystem 17 ist beispielsweise spulenförmig oder als Spulensystem um die Außenseite der Wand 8 angeordnet, wobei das Fluid durch das Rohrsystem 17 geleitet wird. In Richtung der schmelzabgewandten Seite 9b der Diffusionsbarriereschicht 9 oder der Wand 8 sind entsprechende Öffnungen vorgesehen, aus welchen das Fluid austreten kann. In einer Ausführungsform bildet das Spulensystem zusätzlich das Spulensystem zur induktiven Beheizung der Schmelze 1. Fig. 18 zeigt eine weitere Ausführungsform des fluiden Vorhangs 16, wobei das Fluid mittels einzelner Düsen 18 erzeugt wird.

Um eine entsprechend definierte Atmosphäre 15a erzeugen zu können, können, wie in Figur 19 beispielhaft gezeigt, die Vorrichtungen aus Figur 2 auch vollständig mit einer schematisch dargestellten Verkapselung 15 versehen werden.

Wie bereits dargelegt, umfasst eine Wand 8 oder eine Diffusionsbarriereschicht 9 im Sinne der Anmeldung nicht nur die Hülle oder Wand 8 eines in der Herstellung von Glas oder in der Behandlung von Glasschmelzen 1 verwendeten Bauteils sondern auch den gesamten Körper, aus dem sich das entsprechende Bauteil zusammensetzt oder gebildet ist. Mit anderen Worten, nicht nur ein Bereich oder die Hülle eines Bauteils sondern auch der Kern des Bauteils weisen das gleiche Material auf.

Dazu zeigt Figur 20 beispielhaft die Rührvorrichtung, genauer den Rührer 7 aus Figur 2 in einer vergrößerten Darstellung. Vorliegend besteht das gesamte Bauteil, hier die vollständige Rührvorrichtung 7, aus einem iridiumhaltigen Abschnitt 7a. Mit anderen Worten, die Rührvorrichtung 7 ist hergestellt aus Iridium oder einer Iridiumlegierung mit den genannten Eigenschaften.

Figur 21 zeigt entsprechend Figur 20 die Rührvorrichtung 7, vorliegend jedoch ausgebildet als ein zweischichtiges System. Die Rührvorrichtung 7 weist eine Hülle 7b, welche einen Kontakt mit der Schmelze aufweist und somit eine Schmelzkontaktschicht 9 darstellt und einen Kern 7c auf, welcher keine Kontaktfläche zur Schmelze besitzt. An den Kern 7c sind entsprechend nur Anforderungen hinsichtlich thermischer und mechanischer Stabilität zu stellen. Der Kern stellt somit eine Trägerschicht 10 im Sinne der Anmeldung dar. Der Kern 7b ist verkapselt mittels einer auf seiner Oberfläche abgeschiedenen oder aufgetragenen iridiumhaltigen Diffusionsbarriereschicht 9, umfassend Iridium oder eine Iridiumlegierung. Diese vermittelt der Rührvorrichtung 7 die erforderliche chemische Stabilität.

Die Figuren 22a bis 22d zeigen schematisch den Mechanismus der Sauerstoffdiffusionshemmung von Iridium umfassenden Bauteilen. Es ist gezeigt, dass mit zunehmender Temperatur von Figur 22a hin zu 22d die thermische Zersetzung des in der Glasschmelze enthaltenen Wassers 30 zunimmt. In Figur 22d, in der die Temperatur am höchsten ist, ist ein Teil des Wassers 30 in Wasserstoff 32 und Sauerstoff 31 dissoziiert. Bedingt durch die hohe Dichte der Iridium umfassenden Wand 35 wird eine Wasserstoffdiffusion vom Innenraum 33 in den Außenraum 34 durch eine Iridium umfassende Wand 35 hindurch, verhindert.

In den Figuren 23a bis 23d ist die Diffusion von Wasserstoff durch ein Metallbauteil, beispielsweise eine Platinwand dargestellt. Die Figuren 23a bis 23d zeigen, dass mit zunehmender Temperatur von Figur 23a hin zu 23d, die thermische Zersetzung des in der Glasschmelze enthaltenen Wassers 30 zunimmt. Wie aus Figur 23b ersichtlich wird, kommt es sofort nach Beginn der thermischen Spaltung des Wassers 30 in Sauerstoff 31 und Wasserstoff 32 zum Einsetzen einer Wasserstoffdiffusion durch die Platinwand 35 hindurch. Da Platin für Wasserstoff 32 permeabel ist, stellt sich ein Konzentrationsgleichgewicht auf beiden Seiten der Wand 35 ein. Der im Innenraum 33 verbleibende Überschuss an Sauerstoff 31 bewirkt bei dem Abkühlen der Schmelze 1, besonders im Wandbereich, durch einen erhöhten Sauerstoffpartialdruck im Glas die Entstehung von Blasen.
Es ist dem Fachmann ersichtlich, dass die vorstehend beschriebenen Ausführungsformen beispielhaft zu verstehen sind. Die Erfindung ist nicht auf diese beschränkt, sondern kann in vielfältiger Weise variiert werden kann. Die einzeln gezeigten Merkmale können zudem miteinander kombiniert werden.

### Bezugszeichenliste:

- 1: Schmelze oder Glasschmelze
- 1a: Schmelzoberfläche
- 1b: Schmelzfluß
- 2: Schmelztiegel
- 3: Erste Rinne
- 4: Läuterwanne
- 5: Zweite Rinne
- 6: Homogenisierungsvorrichtung
- 7: Rührvorrichtung
- 7a: Irdiumhaltiger Abschnitt
- 7b: Hülle
- 7c: Kern
- 8: Wand
- 8a: Schmelzkontaktfläche9 Diffusionsbarriereschicht
- 9a: Schmelzzugewandte Seite
- 9b: Schmelzabgewandte Seite
- 9c: Iridiumhaltiger (Wand-) Abschnitt
- 9d: Iridiumarmer (Wand-) Abschnitt
- 9e: Iridiumfreier (Wand-) Abschnitt
- 10: Trägerschicht
- 11: Schutzschicht
- 12: Konditionierungseinrichtung
- 13: Spulensystem
- 14: Raum zwischen Schmelzoberfläche 1a und der Wand 8
- 15: Verkapselung
- 15a: Definierte Atmosphäre
- 16: Fluider Vorhang
- 17: Rohrsystem
- 18: Düse
- 19: Poröses Material
- 30: Wassermolekül
- 31: Sauerstoffatom
- 32: Wasserstoffatom
- 33: Innenraum
- 34: Außenraum
- 35: Iridium umfassende Wand
- 36: Platinwand
- A1: Ausschnitt der Wand 8 aus Figur 2

## Patentansprüche

1. Wand (8) einer Homogenisierungsvorrichtung (6) für Glasschmelzen oder Wand (8), Boden oder Abdeckung eines Schmelztiegels, einer Läuterwanne (4) einer Rinne (3,5), oder einer Konditionierungsvorrichtung (12) für Glasschmelzen, wobei die Wand (8), der Boden oder die Abdeckung eine Iridium umfassende Diffusionsbarriereschicht aufweist, welche die Diffusion von Wasserstoff verringert, **dadurch gekennzeichnet dass** die Diffusionsbarriereschicht (9) eine schmelzzugewandte Seite (9a) aufweist, welche die Schmelzkontaktfläche (8a) der Wand (8), des Bodens oder der Abdeckung bildet und wobei an einer schmelzabgewandten Seite (9b) der Diffusionsbarriereschicht (9) eine definierte Atmosphäre (15a) mit einem Gas zum Schutz vor Oxidation mittels Anordnen einer Verkapselung (15) anliegt.

2. Wand (8), Boden oder Abdeckung nach Anspruch 1, **dadurch gekennzeichnet, dass** die Diffusionsbarriereschicht (9) einen Anteil an Iridium aufweist, der, ausgehend von einer schmelzzugewandten Seite (9a) der Diffusionsbarriereschicht (9) in Richtung einer schmelzabgewandten Seite (9b) der Diffusionsbarriereschicht (9), insbesondere graduell, abnimmt.

3. Wand (8), Boden oder Abdeckung nach Anspruch 1, **dadurch gekennzeichnet, dass** die Diffusionsbarriereschicht (9) einen Anteil an Iridium aufweist, der, ausgehend von einer schmelzzugewandten Seite (9a) der Diffusionsbarriereschicht (9) in Richtung einer schmelzabgewandten Seite (9b) der Diffusionsbarriereschicht (9), insbesondere graduell, zunimmt.

4. Wand (8), Boden oder Abdeckung nach einem der vorstehenden Ansprüche, **dadurch gekennzeichnet, dass** die definierte Atmosphäre (15a) ein Fluid, insbesondere ein Gas, vorzugsweise Stickstoff, Argon, Helium und/oder Formiergas umfasst.

5. Raum mit einer Wand (8) einer Homogenisierungsvorrichtung (6) oder mit einer Wand (8), einem Boden oder einer Abdeckung eines Schmelztiegels, einer Läuterwanne (4) einer Rinne (3,5)oder einer Konditionierungsvorrichtung (12) für Glasschmelzen, wobei die Wand (8), der Boden oder die Abdeckung eine Iridium umfassende Diffusionsbarriereschicht aufweist, welche die Diffusion von Wasserstoff verringert, **dadurch gekennzeichnet dass** die Diffusionsbarriereschicht (9) eine schmelzabgewandte Seite (9b) aufweist, wobei in dem Raum, welcher die schmelzabgewandte Seite (9b) umgibt, eine definierte Atmosphäre (15a) mit einem Gas zum Schutz vor Oxidation anliegt, wobei die definierte Atmosphäre (15a) mit einem Gas zum Schutz vor Oxidation an der schmelzabgewandten Seite (9b) der Diffusionsbarriereschicht (9) mittels Anordnen einer Verkapselung (15) anliegt.

6. Raum nach Anspruch 5, **dadurch gekennzeichnet, dass** die Wand (8), der Boden oder die Abdeckung zumindest eine Trägerschicht (10) aufweist.

7. Raum nach Anspruch 6, **dadurch gekennzeichnet, dass** die Trägerschicht (10) die Diffusionsbarriereschicht (9) umfasst.

8. Raum nach einem der Anspruch 6 oder 7, **dadurch gekennzeichnet, dass** die Trägerschicht (10) zumindest ein refraktäres Material aufweist.

9. Raum nach einem der Ansprüche 6 bis 8, **dadurch gekennzeichnet, dass** auf der Trägerschicht (10) die Diffusionsbarriereschicht (9) angeordnet ist.

## Claims

1. A wall (8) of a homogenizing device (6) for glass melts, or a wall (8), a bottom or a cover of a melting crucible, of a refining trough (4), of a channel (3, 5) or of a conditioning device (12) for glass melts, wherein said wall (8), said bottom or said cover comprises an iridium-containing diffusion barrier layer that reduces hydrogen diffusion; **characterized in that** the diffusion barrier layer (9) has a melt-facing side (9a) that defines the melt contact surface (8a) of the wall (8), bottom or cover, and wherein a defined atmosphere (15a) including a gas for protection against oxidation is applied on a side (9b) of the diffusion barrier layer (9) facing away from the melt, through provision of an encapsulation (15).

2. The wall (8), bottom or cover according to claim 1, **characterized in that** the diffusion barrier layer (9) includes a content of iridium that decreases, in particular gradually, starting from a melt-facing side (9a) of the diffusion barrier layer (9) in the direction toward a side (9b) of the diffusion barrier layer (9) facing away from the melt.

3. The wall (8), bottom or cover according to claim 1, **characterized in that** the diffusion barrier layer (9) includes a content of iridium that increases, in particular gradually, starting from a melt-facing side (9a) of the diffusion barrier layer (9) in the direction toward a side (9b) of the diffusion barrier layer (9) facing away from the melt.

4. The wall (8), bottom or cover according to any one of the preceding claims, **characterized in that** the defined atmosphere (15a) comprises a fluid, in particular a gas, preferably nitrogen, argon, helium and/or forming gas.

5. A space including a wall (8) of a homogenizing device (6) or a wall (8), a bottom or a cover of a crucible, of a refining trough (4), of a channel (3, 5) or of a conditioning device (12) for glass melts, wherein said wall (8), said bottom or said cover comprises an iridium-containing diffusion barrier layer that reduces hydrogen diffusion; **characterized in that** the diffusion barrier layer (9) has a side (9b) facing away from the melt, wherein a defined atmosphere (15a) including a gas for protection against oxidation is applied in the space surrounding the side (9b) facing away from the melt, wherein the defined atmosphere (15a) including a gas for protection against oxidation is applied on the side (9b) facing away from the melt of the diffusion barrier layer (9) through provision of an encapsulation (15).

6. The space according to claim 5, **characterized in that** said wall (8), bottom or cover has at least one carrier layer (10).

7. The space according to claim 6, **characterized in that** said carrier layer (10) comprises the diffusion barrier layer (9).

8. The space according to any one of claim 6 or 7, **characterized in that** the carrier layer (10) comprises at least one refractory material.

9. The space according to any one of claims 6 to 8, **characterized in that** the diffusion barrier layer (9) is disposed on the carrier layer (10).

## Revendications

1. Paroi (8) d'un dispositif d'homogénéisation (6) pour masses fondues de verre ou paroi (8), fond ou couvercle d'un creuset, d'un bassin d'affinage (4), d'une rigole (3, 5), ou d'un dispositif de conditionnement (12) pour masses fondues de verre, où la paroi (8), le fond ou le couvercle présente une couche barrière à la diffusion comportant de l'iridium, laquelle réduit la diffusion d'hydrogène, caractérisé(e) en ce que la couche barrière à la diffusion (9) présente une face tournée vers la masse fondue (9a), laquelle face forme la surface de contact avec la masse fondue (8a) de la paroi (8), du fond ou du couvercle et où une atmosphère définie (15a) présentant un gaz de protection contre l'oxydation s'applique contre une face opposée à la masse fondue (9b) de la couche barrière à la diffusion (9) par agencement d'un encapsulage (15).

2. Paroi (8), fond ou couvercle selon la revendication 1, caractérisé(e) en ce que la couche barrière à la diffusion (9) présente une part d'iridium qui diminue, en particulier progressivement, à partir d'une face tournée vers la masse fondue (9a) de la couche barrière à la diffusion (9) en direction d'une face opposée à la masse fondue (9b) de la couche barrière à la diffusion (9).

3. Paroi (8), fond ou couvercle selon la revendication 1, caractérisé(e) en ce que la couche barrière à la diffusion (9) présente une part d'iridium qui augmente, en particulier progressivement, à partir d'une face tournée vers la masse fondue (9a) de la couche barrière à la diffusion (9) en direction d'une face opposée à la masse fondue (9b) de la couche barrière à la diffusion (9).

4. Paroi (8), fond ou couvercle selon l'une quelconque des revendications précédentes, caractérisé(e) en ce que l'atmosphère définie (15a) comporte un fluide, en particulier un gaz, de préférence de l'azote, de l'argon, de l'hélium et/ou un gaz de formage.

5. Chambre comprenant une paroi (8) d'un dispositif d'homogénéisation (6) ou une paroi (8), un fond ou un couvercle d'un creuset, d'un bassin d'affinage (4), d'une rigole (3, 5), ou d'un dispositif de conditionnement (12) pour masses fondues de verre, où la paroi (8), le fond ou le couvercle présente une couche barrière à la diffusion comportant de l'iridium, laquelle réduit la diffusion d'hydrogène, **caractérisée en ce que** la couche barrière à la diffusion (9) présente une face opposée à la masse fondue (9b), où une atmosphère définie (15a) présentant un gaz de protection contre l'oxydation s'applique dans la chambre, laquelle entoure la face opposée à la masse fondue (9b), où l'atmosphère définie (15a) présentant un gaz de protection contre l'oxydation s'applique contre la face opposée à la masse fondue (9b) de la couche barrière à la diffusion (9) par agencement d'un encapsulage (15).

6. Chambre selon la revendication 5, **caractérisée en ce que** la paroi (8), le fond ou le couvercle présente au moins une couche de support (10).

7. Chambre selon la revendication 6, **caractérisée en ce que** la couche de support (10) comporte la couche barrière à la diffusion (9).

8. Chambre selon la revendication 6 ou 7, **caractérisée en ce que** la couche de support (10) comprend au moins un matériau réfractaire.

9. Chambre selon l'une quelconque des revendications 6 à 8, **caractérisée en ce que** la couche barrière à la diffusion (9) est agencée sur la couche de support (10).
